# EUROPEAN PATENT APPLICATION

(11) **EP 4 517 871 A1**
(43) Date of publication of application: **05.03.2025**
(21) Application number: 22966261.4
(22) Date of filing: 25.11.2022
(51) Int. Cl.: H01M 4/36, H01M 4/583

(54) **CARBON MATERIAL AND PREPARATION METHOD THEREFOR, SECONDARY BATTERY CONTAINING CARBON MATERIAL, AND ELECTRIC APPARATUS**

(71) Applicant: Contemporary Amperex Technology (Hong Kong) Limited, Central, Central And Western District (HK)
(72) Inventor: LI, Yuanyuan, Ningde City, Fujian 352100 (CN); SHEN, Rui, Ningde City, Fujian 352100 (CN); HE, Libing, Ningde City, Fujian 352100 (CN)
(74) Representative: Kraus & Lederer PartGmbB
(86) International application number: PCT/CN2022/134442
(87) International publication number: WO 2024/108573

(57) **Abstract**

The present application provides a carbon material and a preparation method therefor, a secondary battery containing same and a power consuming device. The carbon material comprises pore structures, and has two diffraction peaks in a range of 25.5°-27.5° of 2θ in a peak-resolving pattern of an X-ray diffraction pattern of the carbon material. The secondary battery provided by the present application has both a good cycling performance and a dynamic performance.

## Description

### Technical Field

The present application belongs to the technical field of batteries, and in particular relates to a carbon material and a preparation method therefor, a secondary battery containing same and a power consuming device.

### Background Art

In recent years, secondary batteries have been widely used in energy storage power systems such as hydroelectric, thermal, wind and solar power plants, as well as electric tools, electric bicycles, electric motorcycles, electric vehicles, military equipment, aerospace and other fields. As the secondary batteries are used in a wider range of applications, serious changes have been posed on the performance of the secondary batteries, for example the secondary batteries are required to meet various performances such as energy density, dynamic performance and service life. A negative electrode active material is an important constituent of the secondary batteries and affects the performance of the secondary batteries. Currently, the negative electrode active material mainly includes graphite. However, a problem faced in the prior art: it is difficult for high-capacity graphite to achieve both good cycling performance and dynamic performance in the secondary batteries.

### Summary

The present application aims to provide a carbon material and a preparation method therefor, a secondary battery containing same and a power consuming device, which enable both good cycling performance and dynamic performance of the secondary battery.

A first aspect of the present application provides a carbon material, wherein the carbon material comprises pore structures, and has two diffraction peaks in a range of 25.5°-27.5° of 2θ in a peak-resolving pattern of an X-ray diffraction pattern of the carbon material.

The inventors of the present application find during the researches that when the carbon material comprises pore structures and has two diffraction peaks in a range of 25.5°-27.5° of 2θ in a peak-resolving pattern of an X-ray diffraction pattern of the carbon material, the secondary batteries have both good cycling performance and dynamic performance.

In any embodiment of the present application, in the two diffraction peaks, a peak with a smaller 2θ is designated as a first peak, a peak with a larger 2θ is designated as a second peak, with a ratio of the intensity of the first peak to that of the second peak being 10 : 90 to 40 : 60, optionally 15 : 85 to 35 : 65. When the ratio of the intensity of the first peak to that of the second peak is within the above range, the secondary battery using the carbon material can achieve both better cycling performance and dynamic performance, and at the same time further has a higher energy density.

In any embodiment of the present application, the carbon material comprises one or more pore structures having a pore area greater than or equal to 0.1 µm², optionally one or more pore structures having a pore area of 0.15 µm²-3.0 µm². When the carbon material comprises pore structures having the above pore area, the pore structures can reserve a required expansion space for a volume change of a carbon material particle. Therefore, a risk of a new interface generated by breakage of the carbon material particle can be further reduced, thus reducing the occurrence of side reactions and the irreversible capacity loss of the secondary battery, and improving the cycling performance of the secondary battery.

In any embodiment of the present application, the carbon material comprises an outer region and an inner region located inside the outer region, wherein the outer region is a region extending from a surface of a carbon material particle to an inside of the particle by a distance of 0.25 L, L is a short axis length of the carbon material particle, the outer region has a total pore area designated as S₁, the inner region has a total pore area designated as S₂, and S₂ > S₁. When the carbon material further satisfies that S₂ > S₁, the irreversible capacity loss of the secondary battery can be effectively reduced, the capacity exertion characteristic of the secondary battery can be improved, and the secondary battery can better have a high initial coulombic efficiency, a high energy density, and good cycling performance and dynamic performance.

In any embodiment of the present application, 1.5 ≤ S₂/S₁ ≤ 450, optionally, 2 ≤ S₂/S₁ ≤ 400. When S₂/S₁ further satisfies the above range, the secondary battery can better have a high initial coulombic efficiency, a high energy density, and good cycling performance and dynamic performance.

In any embodiment of the present application, 0.01 µm² ≤ S₁ ≤ 8.0 µm², optionally, 0.02 µm² ≤ S₁ ≤ 4.5 µm². When the total pore area of the outer region of the carbon material is within the above range, on the one hand, the carbon material particle can have a more stable structure, which can prevent an electrolyte solution from penetrating into the pore structures inside the carbon material particle as much as possible, thereby reducing the occurrence of side reactions and reducing the consumption of active ions by a film formation of an SEI film inside the carbon material particle, and on the other hand, the transmission performance of active ions and electrons is further not affected.

In any embodiments of the present application, 2.5 µm² ≤ S₂ ≤ 25.0 µm², optionally, 3.0 µm² ≤ S₂ ≤ 22.5 µm². When the total pore area of the inner region of the carbon material is within the above range, on one hand, a sufficient and stable expansion space can be reserved for a volume change of a carbon material particle, reducing the risk of a new interface generated by breakage of the carbon material particle, and the occurrence of side reactions on the surface of the new interface, as well as the consumption of active ions by a film formation of an SEI film on the surface of the new interface, and on the other hand, the capacity and initial coulombic efficiency of the carbon material can be further improved.

In any embodiment of the present application, L ≥ 4 µm, optionally, 4 µm ≤ L ≤ 20 µm.

In any embodiment of the present application, the area of the pore structures in the outer region of the carbon material is less than or equal to 0.2 µm², optionally less than or equal to 0.1 µm². By controlling the area of the pore structures in the outer region of the carbon material within the above range, the outer region of the carbon material can have a compact structure, such that the structural stability of the carbon material can be effectively improved, which can prevent an electrolyte solution from permeating into the pore structures in the carbon material particle as much as possible, and thus effectively improving the cycling performance of the secondary battery.

In any embodiment of the present application, the inner region of the carbon material comprises one or more pore structures having an area greater than or equal to 0.1 µm², optionally one or more pore structures having an area of 0.15 µm²-3.0 µm². When the inner region of the carbon material comprises pore structures of the above size, on the one hand, a sufficient and stable expansion space can be reserved for a volume change of the carbon material particle, reducing the risk of breakage of the carbon material particle, and on the other hand, the compacted density of the carbon material can be further improved, increasing the energy density of the secondary battery.

In any embodiment of the present application, the carbon material has a specific surface area of 0.5 m²/g-3.1 m²/g, optionally 0.7 m²/g-2.8 m²/g. The carbon material of the present application has a lower specific surface area, such that the consumption of active ions by a film formation of an SEI film can be reduced, and the initial coulombic efficiency of the carbon material is improved.

In any embodiment of the present application, the carbon material has a volume distribution particle size Dv50 of 8.0 µm-23.0 µm, optionally 9.0 µm-22.0 µm. When the carbon material has a volume distribution particle size Dv50 within the above range, the transmission performance of active ions and electrons is favorably improved, such that the cycling performance and the dynamic performance of the secondary battery can be further improved.

In any embodiment of the present application, the carbon material has (Dv90 - Dv10)/Dv50 of ≤ 1.55, optionally 0.5-1.50. Therefore, the compacted density of the carbon material is favorably improved, the energy density of the secondary battery can be further improved, a reasonable pore channel structure is formed between particles of a negative electrode film layer, and the cycling performance and/or the dynamic performance of the secondary battery are improved.

In any embodiment of the present application, the carbon material has a morphology in the shape of one or more of a mass, a sphere, and a spheroid. Therefore, the compacted density of a negative electrode plate is improved and the energy density of the secondary battery is improved.

In any embodiment of the present application, the carbon material has a powder resistivity under a pressure of 8 Mpa of 0.006 Ω.cm-0.051 Ω.cm, optionally 0.010 Ω.cm-0.040 Ω.cm. When the powder resistivity of the carbon material is within the above range, the transmission performance of electrons is favorably improved, such that the cycling performance and the dynamic performance of the secondary battery can be further improved.

In any embodiment of the present application, the carbon material has a powder compacted density under a pressure of 20,000 N of 1.70 g/cm³-1.95 g/cm³, optionally 1.72 g/cm³-1.92 g/cm³. When the powder compacted density of the carbon material is within the range, the compacted density of the negative electrode plate can be improved, and the energy density of the secondary battery is further improved; and the transmission performance of active ions and electrons is favorably improved, and the cycling performance and the dynamic performance of the secondary battery are improved.

In any embodiment of the present application, the carbon material has a tap density of 0.90 g/cm³-1.35 g/cm³, optionally 0.95 g/cm³-1.32 g/cm³. When the carbon material has a tap density within the above range, the compacted density of the negative electrode plate can be improved, and the energy density of the secondary battery is further improved; and the transmission performance of active ions and electrons is favorably improved, and the cycling performance and the dynamic performance of the secondary battery are improved.

In any embodiment of the present application, the carbon material has a capacity per gram of 350 mAh/g-372 mAh/g, optionally 353 mAh/g-371 mAh/g. When the carbon material has a capacity per gram within the above range, the energy density of the secondary battery can be improved.

**In** any embodiment of the present application, the carbon material has a graphitization degree of 91.5%-98.5%, optionally 92.5%-98.0%. When the carbon material has a graphitization degree within the above range, the cycling performance, the storage performance and the dynamic performance of the secondary battery are favorably improved.

**In** any embodiment of the present application, the carbon material has no diffraction peak of a 3R phase C(012) crystal face in an X-ray diffraction pattern of the carbon material. Therefore, the carbon material particle further has fewer internal defects, such that the irreversible consumption of active ions can be further reduced.

A second aspect of the present application provides a method for preparing a carbon material, comprising the steps of: step 1, providing a raw material with a plurality of pore structures; step 2, uniformly mixing the raw material and a filling material at a preset ratio, and then maintaining the mixture at a first temperature T₁ for a first time t₁ to obtain an intermediate; and step 3, maintaining the resulting intermediate at a second temperature T₂ for a second time t₂ to obtain a carbon material, wherein the carbon material comprises pore structures, and has two diffraction peaks in a range of 25.5°-27.5° of 2θ in a peak-resolving pattern of an X-ray diffraction pattern of the carbon material.

The method for preparing a carbon material of the present application is simple in process and high in safety, does not need to preset a pressure or performing a vacuumizing treatment, and can avoid the need of additionally adding a depolymerization process in a heat treatment process. The carbon material prepared by the present application has a small volume expansion, a high structural stability and a high active ion diffusion speed, such that the carbon material can have a higher capacity per gram, a higher initial coulombic efficiency and a smaller volume change, and the secondary battery can further have good cycling performance and dynamic performance, and can further have a high initial coulombic efficiency and a high energy density.

In any embodiment of the present application, the raw material comprises natural graphite, optionally, the natural graphite comprises one or more of crystalline flake graphite, natural spherical graphite, and microcrystalline graphite.

In any embodiment of the present application, the raw material has a volume distribution particle size Dv50 of 7.5 µm-23.0 µm, optionally 9.0 µm-22.0 µm.

In any embodiment of the present application, the raw material has a graphitization degree of ≥ 93.0%.

In any embodiment of the present application, the raw material has a carbon element content of ≥ 98 wt%.

In any embodiment of the present application, the filling material has a softening point temperature of 120°C-300°C, optionally 125°C-250°C.

In any embodiment of the present application, the filling material has a coking value of 25%-70%, optionally 30%-60%.

In any embodiment of the present application, the filling material has a volume distribution particle size Dv50 of less than or equal to 6 µm, optionally 1 µm-5 µm.

In any embodiment of the present application, the filling material comprises one or more of coal tar pitch, petroleum pitch, a resin and a high polymer material, optionally comprising one or more of coal tar pitch and petroleum pitch.

In any embodiment of the present application, a mass ratio of the filling material to the raw material is 10 : 90 to 25 : 75, optionally 12 : 88 to 25 : 75.

By adjusting one or more parameters of the type, softening point, coking value, addition amount, etc., of the filling material within the above ranges, on the one hand, the ratio of the intensity of the first peak to that of the second peak is favorably adjusted within an appropriate range, and on the other hand, the pore size and/or the pore content in the outer region and inner region of the carbon material are favorably adjusted within an appropriate range. In addition, after the filling material is heated and melted, the viscosity is not high, with good fluidity kept, the raw material particles are not easy to adhere, which can reduce the agglomeration of the raw material particles in a subsequent preparation process, therefore problems of increased surface defects, increased surface side reaction active sites, etc., of the carbon material particles due to the need of adding the depolymerization process can be reduced.

In any embodiment of the present application, the first temperature T₁ is 1,000°C-1,400°C, optionally 1,050°C-1,250°C.

In any embodiment of the present application, the first time t₁ is 1 h-5 h, optionally 2 h-4 h.

In any embodiment of the present application, the first temperature T₁ is brought to at a rate of 1°C/min-10°C/min, optionally 1.5°C/min-5°C/min.

By adjusting one or more of the heating rate, the first temperature, the first time, etc., to be within the above ranges, a carbon material achieving a desired structure is favorably prepared, for example, the pore size and/or pore content in the outer region and the inner region of the carbon material are favorably adjusted to be within an appropriate range.

In any embodiment of the present application, the second temperature T₂ is 2,000°C-2,720°C, optionally 2,150°C-2,550°C.

In any embodiment of the present application, the second time t₂ is 1.5 h-6 h, optionally 2 h-5 h.

By adjusting one or both of the second temperature and the second time within the above ranges, the carbon material has two diffraction peaks in a range of 25.5°-27.5° of 2θ in a peak-resolving pattern of an X-ray diffraction pattern of the carbon material and the ratio of the intensity of the first peak to that of the second peak is favorably adjusted within an appropriate range.

A third aspect of the present application provides a secondary battery comprising a negative electrode plate, wherein the negative electrode plate comprises a carbon material according to the first aspect of the present application or a carbon material prepared by the method according to the second aspect of the present application.

A fourth aspect of the present application provides a power consuming device comprising a secondary battery according to the third aspect of the present application.

The carbon material provided by the present application enables both good cycling performance and dynamic performance in a secondary battery, as well as both a high initial coulombic efficiency and a high energy density of the secondary battery. The power consuming device of the present application comprises a secondary battery provided by the present application, thus having at least the same advantages as the secondary battery.

### Brief Description of the Drawings

In order to illustrate the technical solutions of the examples of the present application more clearly, the drawings used in the examples of the present application will be described briefly below. Apparently, the drawings described below are merely some embodiments of the present application, and those of ordinary skill in the art may derive other drawings from these drawings without creative efforts.
Fig. 1 is a peak-resolving pattern of an X-ray diffraction pattern of an embodiment of the carbon material of the present application.
Fig. 2 is a schematic view of a cross-sectional image of the particle of the carbon material of the present application.
Fig. 3 is a schematic diagram of an embodiment of the secondary battery of the present application.
Fig. 4 is an exploded schematic diagram of an embodiment of the secondary battery of the present application.
Fig. 5 is a schematic diagram of an embodiment of the battery module of the present application.
Fig. 6 is a schematic diagram of an embodiment of the battery pack of the present application.
Fig. 7 is an exploded schematic diagram of the embodiment of the battery pack shown in Fig. 6.
Fig. 8 is a schematic diagram of an embodiment of a power consuming device comprising the secondary battery of the present application as a power supply.

In the drawings, the figures are not necessarily drawn to scale. List of reference signs: 1. battery pack, 2. upper box body, 3. lower box body, 4. battery module, 5. secondary battery, 51. housing, 52. electrode assembly, 53. cover plate, 100. carbon material, 101. outer region, and 102. inner region.

### Detailed Description of Embodiments

Hereinafter, embodiments of a carbon material and a preparation method therefor, a secondary battery containing same, and a power consuming device of the present application are specifically disclosed in the detailed description with reference to the accompanying drawings as appropriate. However, unnecessary detailed illustrations may be omitted in some instances. For example, there are situations where detailed description of well-known items and repeated description of actually identical structures are omitted. This is to prevent the following description from being unnecessarily verbose, and facilitates understanding by those skilled in the art. Moreover, the accompanying drawings and the descriptions below are provided for enabling those skilled in the art to fully understand the present application, rather than limiting the subject matter disclosed in the claims.

The "ranges" disclosed in the present application are defined in the form of lower and upper limits. A given range is defined by selecting a lower limit and an upper limit, and the selected lower and upper limits defining the boundaries of the particular range. Ranges defined in this manner may be inclusive or exclusive, and may be arbitrarily combined, that is, any lower limit may be combined with any upper limit to form a range. For example, if the ranges 60-120 and 80-110 are listed for a particular parameter, it should be understood that the ranges 60-110 and 80-120 are also contemplated. Additionally, if minimum range values 1 and 2 are listed and maximum range values 3, 4, and 5 are listed, the following ranges are all contemplated: 1-3, 1-4, 1-5, 2-3, 2-4, and 2-5. In the present application, unless stated otherwise, the numerical range "a-b" denotes an abbreviated representation of any combination of real numbers between a and b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer ≥ 2, it is equivalent to disclosing that the parameter is, for example, an integer of 2, 3, 4, 5, 6, 7, 8, 9, 10, 11, 12, etc.

Unless otherwise stated, all the embodiments and optional embodiments of the present application may be combined with one another to form new technical solutions, and such technical solutions should be considered to be included in the disclosure of the present application.

Unless otherwise stated, all the technical features and optional technical features of the present application may be combined with one another to form new technical solutions, and such technical solutions should be considered to be included in the disclosure of the present application.

Unless otherwise stated, all the steps of the present application may be performed sequentially or randomly, preferably sequentially. For example, the method comprising steps (a) and (b) indicates that the method may comprise steps (a) and (b) performed sequentially, or may also comprise steps (b) and (a) performed sequentially. For example, reference to "the method may further comprise step (c)" indicates that step (c) may be added to the method in any order, e.g., the method may comprise steps (a), (b), and (c), steps (a), (c), and (b), or also steps (c), (a), and (b), etc.

The terms "comprise" and "include" mentioned in the present application are open-ended or may also be closed-ended, unless otherwise stated. For example, "comprise" and "include" may mean that other components not listed may further be comprised or included, or only the listed components may be comprised or included.

In the present application, the term "or" is inclusive unless otherwise specified. For example, the phrase "A or B" means "A, B, or both A and B". More specifically, the condition "A or B" is satisfied by any one of the following: A is true (or present) and B is false (or not present); A is false (or not present) and B is true (or present); or both A and B are true (or present).

Unless otherwise stated, the terms used in the present application have the meaning well-known to those skilled in the art.

Unless otherwise stated, the values of the parameters mentioned in the present application may be determined by various measurement methods commonly used in the art, for example, may be determined according to the measurement methods illustrated in the present application.

**In** the present application, the term "active ion" refers to an ion that can be intercalated and deintercalated back and forth between a positive electrode and a negative electrode of a secondary battery, including but not limited to a lithium ion, unless otherwise stated.

**In** the present application, the term "more" refers to two or more.

Graphite can be classified into synthetic graphite and natural graphite according to the preparation process or source. The preparation of synthetic graphite generally requires a high-temperature graphitization treatment process, which is high in energy consumption and cost, thereby resulting in a relatively high cost of the synthetic graphite. Natural graphite is derived from nature, and thus has the advantage of a relatively low cost. In addition, the natural graphite further has the advantages of a high capacity and/or a high compacted density.

The natural graphite mainly comprises crystalline flake graphite, natural spherical graphite and microcrystalline graphite, and is generally different from synthetic graphite. The natural graphite has quite a lot of pores and defects in the inside and outside of particles. In an initial charging process of a secondary battery, an electrolyte solution generates more side reactions with the surface of the particles and pores inside the particles, thereby causing a high initial irreversible capacity loss, a low initial coulombic efficiency and poor cycling performance of the secondary battery. In particular, the crystalline flake graphite and natural spherical graphite have a high crystallinity and a high graphitization degree. The microstructure is mostly a layered structure, which results in a large volume change of the natural graphite during the intercalation and deintercalation of active ions, and easily results in breakage of the graphite layered structure and the particles. After the particles are broken, an exposed fresh surface continues to react with the electrolyte solution, thereby further increasing the irreversible capacity loss of the secondary battery. In addition, the natural graphite has a relatively high anisotropy and a slow diffusion of active ions, thereby further resulting in a poor dynamic performance.

At present, the performances of the natural graphite are improved mainly by a particle surface coating treatment and/or a particle internal filling treatment.

The particle surface coating treatment is mainly mixing natural graphite and a coating agent (such as pitch, a high molecular compound, etc.,) uniformly, then thermally treating the mixture to coat an amorphous carbon layer on the surface of the natural graphite particle so as to slightly repair the defects in the particle surface. However, the inventors of the present application find during the researches that the surface-coated amorphous carbon layer causes a decrease in the capacity per gram and/or the compacted density of the natural graphite, affecting the energy density of the secondary battery. Meanwhile, the surface-coated amorphous carbon layer can not effectively prevent the electrolyte solution from penetrating into the pore structures inside the particles, thereby resulting in a limited effect of improving the initial coulombic efficiency and cycling performance of the secondary battery.

The particle internal filling treatment mainly comprises mixing natural graphite with a filler (such as pitch, a polymer compound, etc), and filling the filler into pores inside particles by presetting a pressure, vacuumizing, heating, etc., so as to obtain the natural graphite without pores inside the particles. However, the inventors of the present application find during the researches that carbon filled in a large amount inside the particles causes a decrease in both the capacity per gram and the compacted density of the natural graphite, affecting the energy density of the secondary battery. Meanwhile, the pores inside the natural graphite particles are completely filled with carbon, such that the natural graphite has a larger volume change during the intercalation and deintercalation of active ions. The particles are easier to break, and then an SEI film on the surfaces of the particles is repeatedly damaged and rebuilt, the irreversible consumption of the active ions is further increased, the irreversible capacity loss of the secondary battery is increased, and the service life of the secondary battery is shortened. In the prior art, an amorphous carbon layer is further continuously coated on the surface of the natural graphite without pores inside the particles, which causes a further decrease in the capacity per gram and/or the compacted density of the natural graphite. Besides, the side reaction activity on the surfaces of the particles is relatively high, thus the service life of the secondary battery cannot be effectively improved.

Therefore, after the natural graphite is modified by the particle surface coating treatment and/or the particle internal filling treatment, although the irreversible capacity loss of the secondary battery can be reduced to some extent and the initial coulombic efficiency of the secondary battery is improved, an effect of improving the initial coulombic efficiency of the secondary battery is limited, and the energy density of the secondary battery is further lost. In addition, it is difficult for the secondary battery to achieve both good cycling performance and good dynamic performance.

**In** view of the above, through a large amount of researches, the inventors of the present application provide a novel carbon material that enables a secondary battery to achieve both good cycling performance and dynamic performance.

### Carbon material

A first aspect of an embodiment of the present application provides a carbon material, wherein the carbon material comprises pore structures, and has two diffraction peaks in a range of 25.5°-27.5° of 2θ in a peak-resolving pattern of an X-ray diffraction pattern of the carbon material.

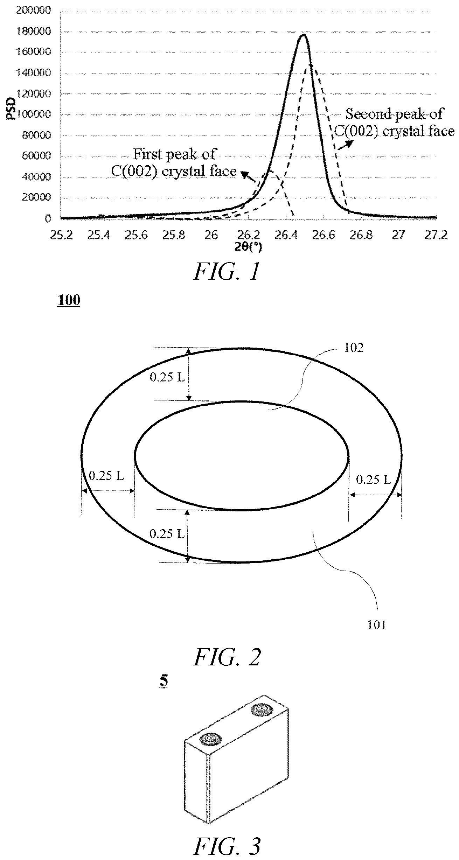

Fig. 1 is a peak-resolving pattern of an X-ray diffraction pattern of an embodiment of the carbon material of the present application. It can be seen from Fig. 1 that two diffraction peaks are resolved in a range of 25.5°-27.5° of 2θ (corresponding to a diffraction peak of carbon 002 crystal face). The inventors of the present application find during the researches that when the carbon material comprises pore structures and has two diffraction peaks in a range of 25.5°-27.5° of 2θ in a peak-resolving pattern of an X-ray diffraction pattern of the carbon material, the secondary batteries have both good cycling performance and dynamic performance. Possible reasons include at least the following.

When two diffraction peaks exist in a range of 25.5°-27.5° of 2θ in a peak-resolving pattern of an X-ray diffraction pattern of the carbon material, the carbon material contains both a crystalline carbon component with a higher graphitization degree (for example, crystalline carbon with a graphitization degree ≥ 95%) and a crystalline carbon component with a lower graphitization degree (for example, crystalline carbon with a graphitization degree of 70%-90%). The crystalline carbon component having a lower graphitization degree may have a relatively large interlayer spacing, thereby facilitating the diffusion of active ions, such that the secondary battery may have a good dynamic performance. On the one hand, the crystalline carbon component with a higher graphitization degree can enable the carbon material to have a high capacity per gram and/or compacted density to improve the energy density of the secondary battery; and on the other hand, the carbon material can further have a stable structure, with a relatively low irreversible consumption of active ions in a cycling process of the secondary battery, such that the secondary battery can have a good cycling performance.

The carbon material provided by the present application comprises pore structures. In the present application, "the carbon material comprises pore structures" means that the carbon material has pore structures that can be directly observed from a cross-sectional image (e.g., a scanning electron microscope image at a magnification of 1,000 times), i.e., the pore structures in the raw material for preparing the carbon material are not completely filled. The pore structures in the carbon material can reserve a required expansion space for a volume change of the carbon material particle, such that the risk of generating a new interface by breakage of the carbon material particle can be reduced, thus reducing the occurrence of side reactions, and the cycling performance of the secondary battery is improved.

Therefore, the carbon material provided by the present application can enable the good cycling performance and dynamic performance of a secondary battery using the carbon material.

When the carbon material does not comprise pore structures, the volume change of the carbon material particles is relatively large during the a charging and discharging process of the secondary battery, such that the risk of generating a new interface by breakage of the carbon material particle is relatively high, the side reactions inside the secondary battery are more, and thus the cycling performance and the dynamic performance of the secondary battery are both relatively poor.

When only one diffraction peak exists in a range of 25.5°-27.5° of 2θ in a peak-resolving pattern of an X-ray diffraction pattern of the carbon material, the carbon material is dominated by a same crystal phase microstructure, i.e., the carbon material has only crystalline carbon with a high graphitization degree or crystalline carbon with a low graphitization degree. When the carbon material refers to crystalline carbon only with a low graphitization degree, the capacity per gram and/or compacted density of the carbon material is low, and the energy density of the secondary battery is low. When the carbon material refers to crystalline carbon only with a high graphitization degree, the interlayer spacing of the carbon material is relatively small, which is not beneficial to the diffusion of active ions. Further, the dynamic performance of the secondary battery is relatively poor and the secondary battery cannot have both good cycling performance and dynamic performance.

In some embodiments, in the two diffraction peaks, the peak with a smaller 2θ is designated as a first peak, the peak with a larger 2θ is designated as a second peak, with a ratio of the intensity of the first peak to that of the second peak being 10 : 90 to 40 : 60, optionally 12 : 88 to 35 : 65, 15 : 85 to 35 : 65, and 15 : 85 to 30 : 70.

The inventors find during further researches that when the ratio of the intensity of the first peak to that of the second peak is within the above range, the secondary battery using the carbon material can achieve both better cycling performance and dynamic performance, and meanwhile can further have a higher energy density.

When the ratio of the intensity of the first peak to that of the second peak is within the above range, the content of the crystalline carbon component with a higher graphitization degree in the carbon material is higher and the content of the crystalline carbon component with a lower graphitization degree in the carbon material is lower. Therefore, the structure of the carbon material is more stable, the irreversible consumption of active ions during a cycling process of the secondary battery is lower, the secondary battery can have a further improved cycling performance, and meanwhile, the secondary battery can further have a high energy density.

Besides, the following situations may be effectively avoided: when the ratio of the intensity of the first peak to that of the second peak is relatively small, that is, the amount of the crystalline carbon component having a relatively low graphitization degree contained in the carbon material is relatively low, the diffusion of active ions may be affected and thus the effect of improving the dynamic performance of the secondary battery may be affected. When the ratio of the intensity of the first peak to that of the second peak is relatively large, that is, the amount of the crystalline carbon component having a relatively low graphitization degree contained in the carbon material is relatively high, the surface side reaction activity of the carbon material particles may be relatively high, with more side reaction between the electrolyte solution and the carbon material particles, and the cycling performance of the secondary battery may be affected. Meanwhile, when the amount of the crystalline carbon component with a low graphitization degree contained in the carbon material is more, the capacity per gram and/or the compacted density of the carbon material may be further lowered, and further the energy density of the secondary battery may be lowered.

In a peak-resolving pattern of an X-ray diffraction pattern of the carbon material of the present application, the 2θ of the first peak is between 26.256°-26.456°, and the 2θ of the second peak is between 26.509°-26.569°.

The peak-resolving pattern of an X-ray diffraction pattern of the carbon material is obtained by refining the X-ray diffraction pattern of the carbon material by a Topas software and a Rietveld full-spectrum fitting and refining method, wherein 2θ is a peak position of a carbon 002 crystal face where 25.5°-27.5° correspond to.

The ratio of the intensity of the first peak to that of the second peak is a ratio of an integrated area of the first peak to that of the second peak.

In some embodiments, the carbon material comprises one or more pore structures having a pore area greater than or equal to 0.1 µm², optionally one or more pore structures having a pore area of 0.15 µm²-3.0 µm². The inventors find in further researches that when the carbon material comprises pore structures having the above pore area, the pore structures can reserve a required expansion space for a volume change of a carbon material particle. Therefore, a risk of a new interface generated by breakage of the carbon material particle can be further reduced, the occurrence of side reactions can be reduced, thus reducing the occurrence of the side reactions of the irreversible capacity loss of the secondary battery, and improving the cycling performance of the secondary battery.

In some embodiments, the carbon material comprises an outer region and an inner region located inside the outer region, wherein the outer region is a region extending from a surface of a carbon material particle to an inside of the particle by a distance of 0.25 L, L is a short axis length of the carbon material particle, the outer region has a total pore area designated as S₁, the inner region has a total pore area designated as S₂, and S₂ > S₁.

In the present application, the total pore area S₁ of the outer region and the total pore area S₂ of the inner region of the carbon material can be obtained by a measurement on a cross-sectional image of the carbon material.

In the present application, the cross-sectional image of the carbon material comprises a cross-sectional image through a center of the carbon material particle. The "particle center" refers to a range within a radius extending 0.1 µm from a geometric center of the particle to the particle surface.

In the present application, the short axis length of the particle refers to the minimum value of a line connecting two points on the surface of the particle passing through the geometric center of the particle.

Fig. 2 is a schematic view of a cross-sectional image of the particle of the carbon material 100 of the present application. The cross-sectional image passes through the particle center of the carbon material 100. As shown in fig. 2, L represents the short axis length of the particle of the carbon material 100, a region extending from the particle surface of the carbon material 100 to the inside of the particle by a distance of 0.25 L is an outer region 101, and a region inside the outer region 101 is an inner region 102.

A cross-section of the carbon material can be prepared using a cross-section polisher (such as a Model IB-09010 CP argon ion cross-section polisher of JEOL corporation, Japan). Then referring to JY/T010-1996, the section of the carbon material is scanned using a scanning electron microscope (e.g., Model Sigma 300 scanning electron microscope, ZEISS, Germany). Finally, the total pore area S₁ of the outer region and the total pore area S₂ of the inner region of the carbon material are calculated by an image processing software (e.g., AVIZO).

The inventors find in further researches that when the carbon material further satisfies S₂ > S₁, the carbon material particle may have the following characteristics: the inner region has a high pore content and/or a large pore size, while the outer region has a low pore content and/or a small pore size. The inner region of the carbon material particle has the high pore content and/or the large pore size. Therefore, the pore structures can reserve a required expansion space for a volume change of the carbon material particle. A risk of a new interface generated by breakage of the carbon material particle can be further reduced, thus reducing the occurrence of side reactions, and the irreversible capacity loss of the secondary battery, and improving the cycling performance and the dynamic performance of the secondary battery. The outer region of the carbon material particle has a low pore content and/or a small pore size. Therefore, the carbon material particle can have a more stable structure, which can prevent an electrolyte solution from penetrating into the pore structures inside the carbon material particle as much as possible, thereby reducing the occurrence of side reactions and reducing the consumption of active ions by a film formation of an SEI film inside the particle, the initial coulombic efficiency of the carbon material can be improved, and the cycling performance of the secondary battery is further improved.

Therefore, when the carbon material further satisfies that S₂ > S₁, the irreversible capacity loss of the secondary battery can be effectively reduced, the capacity exertion characteristic of the secondary battery can be improved, and the secondary battery can better have a high initial coulombic efficiency, a high energy density, and good cycling performance and dynamic performance.

In some embodiments, 1.5 ≤ S₂/S₁ ≤ 450, 2 ≤ S₂/S₁ ≤ 400, 2.1 ≤ S₂/S₁ ≤ 300, 2.2 ≤ S₂/S₁ ≤ 200, 2.3 ≤ S₂/S₁ ≤ 100, and 2.4 ≤ S₂/S₁ ≤ 80. The inventors find in further researches that when S₂/S₁ further satisfies the above range, the secondary battery can better have a high initial coulombic efficiency, a high energy density, and good cycling performance and dynamic performance.

In some embodiments, 0.01 µm² ≤ S₁ ≤ 8.0 µm², optionally, 0.02 µm² ≤ S₁ ≤ 6.5 µ m², 0.02 µm² ≤ S₁ ≤ 5.0 µm², 0.02 µm² ≤ S₁ ≤ 4.5 µm², and 0.05 m² ≤ S₁ ≤ 4.0 µm². When the total pore area of the outer region of the carbon material is within the above range, on the one hand, the carbon material particle can have a more stable structure, which can prevent an electrolyte solution from penetrating into the pore structures inside the carbon material particle as much as possible, thereby reducing the occurrence of side reactions and reducing the consumption of active ions by a film formation of an SEI film inside the carbon material particle, and on the other hand, the transmission performance of active ions and electrons is further not affected.

In some embodiments, 2.5 µm² ≤ S₂ ≤ 25.0 µm², optionally 3.0 µm² ≤ S₂ ≤ 22.5 µm², 4.0 µm² ≤ S₂ ≤ 20 µm², 5.0 µm² ≤ S₂ ≤ 17.5 µm², and 6.0 µm² ≤ S₂ ≤ 15 µm². When the total pore area of the inner region of the carbon material is within the above range, on one hand, a sufficient and stable expansion space can be reserved for a volume change of a carbon material particle, reducing the risk of a new interface generated by breakage of the carbon material particle, and the occurrence of side reactions on the surface of the new interface, as well as the consumption of active ions by a film formation of an SEI film on the surface of the new interface, and on the other hand, the capacity and initial coulombic efficiency of the carbon material can be further improved.

In some embodiments, L ≥ 4 µm, optionally, 4 µm ≤ L ≤ 20 µm, 6 µm ≤ L ≤ 20 µm, 8 µm ≤ L ≤ 20 µm, 8 µm ≤ L ≤ 18 µm, and 8 µm ≤ L ≤ 16 µm.

In some embodiments, the area of the pore structures in the outer region of the carbon material is less than or equal to 0.2 µm², optionally less than or equal to 0.1 µm². The inventors also find in further researches that by controlling the area of the pore structures in the outer region of the carbon material within the above range, the outer region of the carbon material can have a compact structure, such that the structural stability of the carbon material can be effectively improved, which can prevent an electrolyte solution from permeating into the pore structures in the carbon material particle as much as possible, and thus effectively improving the cycling performance of the secondary battery. Of course, the present application is not intended to limit the area of all pore structures in the outer region of the carbon material to be less than or equal to 0.2 µm², for example, 95% or more, optionally 99% or more of the area, of the pore structures can be controlled to be less than or equal to 0.2 µm², optionally less than or equal to 0.1 µm².

In some embodiments, the inner region of the carbon material comprises one or more pore structures having an area greater than or equal to 0.1 µm², optionally comprising one or more pore structures having an area of 0.15 µm²-3.0 µm². The inventors also find in further researches that when the inner region of the carbon material comprises pore structures of the above size, on the one hand, a sufficient and stable expansion space can be reserved for a volume change of the carbon material particle, reducing the risk of breakage of the carbon material particle, and on the other hand, the compacted density of the carbon material can be further improved, increasing the energy density of the secondary battery.

In some embodiments, the carbon material has no diffraction peak of a 3R phase C(012) crystal face in an X-ray diffraction pattern of the carbon material. A 3R (Rhombohedral) phase refers to a rhombohedral phase crystalline carbon with a stacking structure of ABCABC... The carbon material of the present application is free of the diffraction peak of the 3R phase C(012) crystal face. Therefore, the carbon material particle further has fewer internal defects, such that an irreversible consumption of active ions can be further reduced. In the present application, the 2θ of the diffraction peak of the 3R phase C(012) crystal face is in a range of 46°-47°.

In some embodiments, the carbon material has a morphology in the shape of one or more of a mass, a sphere, and a spheroid. Therefore, the compacted density of a negative electrode plate is improved and the energy density of the secondary battery is improved.

In some embodiments, the carbon material comprises primary particles, optionally, the number percentage of the primary particles in the carbon material is ≥ 50%, for example, may be 55%-95%, 60%-100%, 65%-90%, 65%-80%, 70%-100%, 75%-90%, 80%-100%, 90%-100%, or 95%-100%. The carbon material contains the primary particles in a proper proportion, which enables a higher structural stability, and can further reduce the occurrence of side reactions. In addition, the compacted density of a negative electrode plate can be improved and thus the energy density of the secondary battery is improved.

In some embodiments, the carbon material may all be the primary particles, i.e., the number percentage of the primary particles in the carbon material is 100%.

The primary particle and the secondary particle both have the meanings that are well-known in the art. The primary particle refers to a non-agglomerated particle. The secondary particle refers to a particle in an agglomerated state formed by the aggregation of two or more primary particles. The primary particle and the secondary particle can be easily distinguished by using a scanning electron microscope (SEM) image.

In the present application, the number percentage of the primary particles in the carbon material may be measured by the following method: a test sample is randomly taken in a negative electrode film layer, a plurality of test areas are randomly taken in the test sample, images of the plurality of test areas are acquired by using a scanning electron microscope, the number percentage of the carbon material particles with a primary particle morphology in each image with respect to the total number of the carbon material particles, with an average value of a plurality of statistical results being a number percentage of the number of the primary particle in the carbon material.

In some embodiments, the carbon material has a graphitization degree of 91.5%-98.5%, optionally 92.5%-98.0%, 93.5%-98.0% and 94.5%-98.0%. When the carbon material has a graphitization degree within the above range, the cycling performance, the storage performance and the dynamic performance of the secondary battery are favorably improved.

The graphitization degree of the carbon material has a well-known meaning in the art and may be tested by instruments and methods well-known in the art. For example, the graphitization degree may be tested by an X-ray diffractometer (such as Bruker D8 Discover). The test can refer to JIS K 0131-1996 and JB/T 4220-2011, an average interlayer spacing d₀₀₂ of a (002) crystal face in a crystal structure of a carbon material is obtained, and then the graphitization degree is calculated according to the formula g = (0.344 - d₀₀₂)/(0.344 - 0.3354) × 100%. In the above formula, d₀₀₂ is the average interlayer spacing of the (002) crystal face in the crystal structure of the carbon material expressed in nanometers (nm).

In some embodiments, the carbon material has a specific surface area of 0.5 m²/g-3.1 m²/g, optionally 0.7 m²/g-2.8 m²/g. The carbon material of the present application has a lower specific surface area, such that the consumption of active ions by a film formation of an SEI film can be reduced, and the initial coulombic efficiency of the carbon material is improved.

The specific surface area of the carbon material is a well-known meaning in the art, and may be measured by instruments and methods well-known in the art. For example, the specific surface area can be measured with reference to GB/T 19587-2017 using a nitrogen adsorption specific surface area analysis test method, and calculated with a BET (Brunauer Emmett Teller) method, wherein the nitrogen adsorption specific surface area analysis test can be conducted by a Tri-Star 3020 type specific surface area pore size analysis tester from Micromeritics Company in the United States.

In some embodiments, the carbon material has a volume distribution particle size Dv50 of 8.0 µm-23.0 µm, optionally 9.0 µm-22.0 µm.

When the carbon material has a volume distribution particle size Dv50 within the above range, the transmission performance of active ions and electrons is favorably improved, such that the cycling performance and the dynamic performance of the secondary battery can be further improved.

In some embodiments, the carbon material has (Dv90 - Dv10)/Dv50 of ≤ 1.55, optionally 0.5-1.50. When the carbon material has (Dv90 - Dv10)/Dv50 within the above range, the compacted density of the carbon material is favorably improved, the energy density of the secondary battery can be further improved, a reasonable pore channel structure is formed between particles of a negative electrode film layer, and the cycling performance and/or the dynamic performance of the secondary battery are improved.

The volume distribution particle sizes Dv10, Dv50 and Dv90 of the carbon material have a well-known meaning in the art, respectively represent the particle size corresponding to the cumulative volume distribution percentages of the material reaching 10%, 50% and 90%, and may be measured by instruments and methods known in the art. For example, the volume distribution particle sizes can be conveniently measured with reference to GB/T 19077-2016 particle size distributionlaser diffraction method by using a laser particle size analyzer. The test instrument may be a Mastersizer Modle 3000 laser particle size analyzer from Malvern Instruments (UK).

In some embodiments, the carbon material has a powder resistivity under a pressure of 8 Mpa of 0.006 Ω.cm-0.051 Ω.cm, optionally 0.010 Ω.cm-0.040 Ω.cm. When the powder resistivity of the carbon material is within the above range, the transmission performance of electrons is favorably improved, such that the cycling performance and the dynamic performance of the secondary battery can be further improved.

The powder resistivity of the carbon material has a meaning well-known in the art and may be measured by instruments and methods known in the art. For example, the powder resistivity may be measured with reference to GB/T 30835-2014 by a powder resistivity tester (for example, Suzhou Jinge ST2722 and SUNS UTM7305) using a four-probe method. An exemplary measurement method is as follows: a certain amount of a sample powder to be tested is weighed and placed in a special mold, and the test pressure is set, such that the powder resistivities under different pressures can be obtained. In the present application, the test pressure may be set to 8 Mpa.

In some embodiments, the carbon material has a powder compacted density under a pressure of 20,000 N of 1.70 g/cm³-1.95 g/cm³, optionally 1.72 g/cm³-1.92 g/cm³.

When the powder compacted density of the carbon material is within the range, the compacted density of the negative electrode plate can be improved, and the energy density of the secondary battery is further improved; and the transmission performance of active ions and electrons is favorably improved, and the cycling performance and the dynamic performance of the secondary battery are improved.

In the present application, the powder compacted density of the carbon material has a well-known meaning in the art, and can be measured by instruments and methods known in the art. For example, the powder compacted density of the carbon material may be tested with reference to GB/T 24533-2009 using an electronic pressure testing machine (e.g., UTM7305 type electronic pressure testing machine). An exemplary measurement method is as follows: 1 g of a carbon material is weighted and added to a mold with a bottom area of 1.327 cm², and pressurized to 2,000 kg (equivalent to 20,000 N), maintained at the pressure for 30 s, then the depressurized and held for 10 s, and then the powder compacted density of the carbon material under a pressure of 20,000 N is recorded and calculated.

In some embodiments, the carbon material has a tap density of 0.90 g/cm³-1.35 g/cm³, optionally 0.95 g/cm³-1.32 g/cm³. When the carbon material has a tap density within the above range, the compacted density of the negative electrode plate can be improved, and the energy density of the secondary battery is further improved; and the transmission performance of active ions and electrons is favorably improved, and the cycling performance and the dynamic performance of the secondary battery are improved.

The tap density of the carbon material has a meaning well-known in the art and can be measured by instruments and methods known in the art. For example, the tap density of the carbon material can be measured with reference to GB/T 5162-2006 using a powder tap density tester. The tester may be Bettersize Instruments (Dandong) BT-301.

In some embodiments, the carbon material has a capacity per gram of 350 mAh/g-372 mAh/g, optionally 353 mAh/g-371 mAh/g. When the carbon material has a capacity per gram within the above range, the energy density of the secondary battery can be improved.

The capacity per gram of the carbon material has a meaning well-known in the art, and can be measured by methods known in the art. An exemplary measurement method is as follows: a carbon material, a binder of a styrene-butadiene rubber (SBR), a thickener of sodium carboxymethylcellulose (CMC), and a conductive agent of carbon black are fully stirred and mixed at a mass ratio of 96.2 : 1.8 : 1.2 : 0.8 in an appropriate amount of a solvent of deionized water to form a uniform negative electrode slurry; the negative electrode slurry is uniformly coated onto a surface of a negative electrode current collector of a copper foil, followed by drying in a baking oven for use; ethylene carbonate (EC), ethyl methyl carbonate (EMC), and diethyl carbonate (DEC) at a volume ratio of 1 : 1 : 1 are mixed to obtain an organic solvent, and then LiPF₆ is dissolved in the organic solvent to prepare an electrolyte solution at a concentration of 1 mol/L; and followed by assembling a CR2430 button cell in an argon-protected glove box using a metal lithium plate as a counter electrode, and a polyethylene (PE) film as a separator. At 25°C, the button cell prepared above is discharged to 0.005 V at a current of 0.15 mA, left to stand for 5 min, and then discharged to 0.005 V at a constant current of 10 µA. A first-cycle discharging capacity of the button cell is recorded. Then the button cell is charged to 2.0 V at a constant current of 0.3 mA. The charging capacity of the button cell is recorded. A ratio of the charging capacity of the button cell to the mass of the carbon material sample is the capacity per gram of the carbon material.

### Preparation method

A second aspect of an embodiment of the present application provides a method for preparing a carbon material. By the method, the carbon material of a first aspect of an embodiment of the present application can be prepared.

The method for preparing a carbon material comprises the steps of: comprising the step of: step 1, providing a raw material with a plurality of pore structures; step 2, uniformly mixing the raw material and a filling material at a preset ratio, and then maintaining the mixture at a first temperature T₁ for a first time t₁ to obtain an intermediate; and step 3, maintaining the resulting intermediate at a second temperature T₂ for a second time t₂ to obtain a carbon material, wherein the carbon material comprises pore structures, and has two diffraction peaks in a range of 25.5°-27.5° of 2θ in a peak-resolving pattern of an X-ray diffraction pattern of the carbon material.

In some embodiments, the raw material for preparing the carbon material comprises natural graphite. Optionally, the natural graphite comprises one or more of crystalline flake graphite, natural spherical graphite, and microcrystalline graphite, more optionally, the natural spherical graphite.

In the present application, the "natural spherical graphite" means the natural graphite having a spherical shape or a spheroidal shape. Besides, not all natural graphite particles are controlled to be ideal spheres. In some embodiments, the crystalline flake graphite may be pretreated to obtain natural spherical graphite of desired particle size and morphology. Optionally, the pretreatment comprises crushing, classifying, spheroidizing, purifying, etc.

In some embodiments, the raw material has a morphology in the shape pf one or more of a sphere and a spheroid.

In some embodiments, the raw material has a volume distribution particle size Dv50 of 7.5 µm-23.0 µm, optionally 9.0 µm-22.0 µm. When the volume distribution particle size of the raw material is within the above range, the subsequent filling treatment is facilitated.

In some embodiments, the raw material has a graphitization degree of ≥ 93.0%, optionally ≥ 93.5%, ≥ 94.0%, ≥ 94.5% and ≥ 95.0%, Thus facilitating a high capacity per gram of the carbon material.

In some embodiments, the raw material has a carbon element content of ≥ 98 wt%.

In some embodiments, the filling material has a softening point temperature of 120°C-300°C, optionally 120°C-250°C, 120°C-225°C, 120°C-200°C, 120°C-180°C, 120°C-170°C, 120°C-160°C, 125°C-250°C, 125°C-225°C, 125°C-200°C, 125°C-180°C, 125°C-170°C, and 125°C-160°C.

The inventors find during the researches that when the filling material has a softening point temperature within the above range, the pore size and/or the pore content in the outer region and the inner region of the carbon material are favorably adjusted within an appropriate range, and the ratio of the intensity of the first peak to that of the second peak is further favorably adjusted within an appropriate range. Besides, the following situations may be effectively avoided: when the softening point temperature of the filling material is too high, the filling material is not easy to flow and is filled into the pore structures of the raw material, such that the internal defects of the particle cannot be effectively modified and the electrolyte solution cannot be effectively prevented from permeating into the pore structures inside the resulting carbon material particles, thereby further affecting the initial coulombic efficiency and the cycling performance of the secondary battery. When the softening point temperature of the filling material is too low, the filling material contains more small molecular substances which are easily volatile by heating. Therefore, although the filling material is easy to flow and fill into the pore structures of the raw material, the small molecular substances in the filling material volatilize when the heat treatment is performed in step 2 and/or step 3. Therefore, the actual residual carbon in the filling region cannot effectively fill the pore structures of the raw material, an effective filling effect cannot be realized, or the actual residual carbon in the filling region has more pore structures, such that the consumption of active ions by a film formation of an SEI film and thus the irreversible capacity loss of the secondary battery cannot be reduced. At the same time, the cycling performance, the dynamic performance and/or the storage performance of the secondary battery may further be affected.

**In** some embodiments, the filling material has a coking value of 25%-70%, optionally 30%-60%. The inventors find during the researches that when the filling material has a coking value within the above range, the pore size and/or the pore content in the outer region and the inner region of the carbon material are favorably adjusted within an appropriate range, and the ratio of the intensity of the first peak to that of the second peak is further favorably adjusted within an appropriate range.

The coking value of the filling material has a meaning well-known in the art and can be measured by instruments and methods well-known in the art. For example, the coking value of the filling material can be measured with reference to GB/T 8727-2008.

In some embodiments, the filling material has a volume distribution particle size Dv50 of less than or equal to 6 µm, optionally 1 µm-6 µm, 2 µm-5 µm, and 3 µm-5 µm, thus facilitating, the filling of the filling material into the pore structures of the raw material, and further the improvement of the dispersion uniformity of the filling material and the raw material.

In some embodiments, the filling material comprises one or more of coal tar pitch, petroleum pitch, a resin and a high polymer material, optionally one or more of coal tar pitch and petroleum pitch.

In some embodiments, a mass ratio of the filling material to the raw material is 10 : 90 to 25 : 75, optionally 12 : 88 to 25 : 75, Thus, facilitating the adjustment of the pore size and/or the pore content in the outer region and the inner region of the carbon material within an appropriate range, and further the adjustment of the ratio of the intensity of the first peak to that of the second peak within an appropriate range. Besides, the following situations may be effectively avoided: when the mass ratio of the filling material to the raw material is too small, the dispersion uniformity of the filling material into the raw material may be deteriorated. At this time, the filling material cannot effectively modify the internal defect of the particles and cannot effectively prevent the electrolyte solution from permeating into the pore structures inside the resulting carbon material particles, thereby affecting the initial coulombic efficiency and cycling performance of the secondary battery. When the mass ratio of the filling material to the raw material is too small, a ratio of the intensity of the first peak to that of the second peak also tends to be relatively small, thereby further affecting the dynamic performance of the secondary battery. When the mass ratio of the filling material to the raw material is too large, the internal pore structures of the raw material is easily filled completely. At this time, the volume change of the resulting carbon material is large, the particles are easily break, the consumption of active ions caused by a film formation of an SEI film is increased, and the irreversible capacity loss of the secondary battery is increased. When the mass ratio of the filling material to the raw material is too large, a large amount of a filling material will remain on the surface of the particles. At this time, the particles are easier to agglomerate, the depolymerization process is increased, and the capacity per gram and/or the compacted density of the resulting carbon material will be reduced. When the mass ratio of the filling material to the raw material is too large, a ratio of the intensity of the first peak to that of the second peak also tends to be relatively large. Therefore, the content of the crystalline carbon component with a low graphitization degree in the resulting carbon material is relatively high. The energy density and cycling performance of the secondary battery are affected.

By adjusting one or more parameters of the type, softening point, coking value, addition amount, etc., of the filling material within the above ranges, on the one hand, the ratio of the intensity of the first peak to that of the second peak is favorably adjusted within an appropriate range, and on the other hand, the pore size and/or the pore content in the outer region and inner region of the carbon material are favorably adjusted within an appropriate range. In addition, after the filling material is heated and melted, the viscosity is not high, with good fluidity kept, the raw material particles are not easy to adhere, which can reduce the agglomeration of the raw material particles in a subsequent preparation process, therefore problems of increased surface defects, increased surface side reaction active sites, etc., of the carbon material particles due to the need of adding the depolymerization process can be reduced.

In some embodiments, in step 2, the first temperature T₁ is 1,000°C-1,400°C, optionally 1,000°C-1,350°C, 1,000°C-1,300°C, 1,050°C-1,350°C, 1,050°C-1,300°C, and 1050°C-1,250°C. The inventors find during the researches that when the first temperature is within the above range, the pore size and/or the pore content in the outer region and the inner region of the carbon material are favorably adjusted to be within an appropriate range.

In some embodiments, the first time t₁ is 1 h-5 h. For example, the first time t₁ may be a range consisting of any value of 1 h, 1.5 h, 2 h, 2.5 h, 3 h, 3.5 h, 4 h, 4.5 h, 5 h or more. Optionally, the first time t₁ is 2 h-4 h. The inventors find during the researches that when the first time is within the above range, the pore size and/or the pore content in the outer region and inner region of the carbon material are favorably adjusted to be within an appropriate range.

In some embodiments, in step 2, the first temperature T₁ is brought to at a rate of 1 °C/min-10°C/min. For example, the heating rate may be a range consisting of any value of 1.5°C/min, 2°C/min, 3°C/min, 4°C/min, 5°C/min, 6°C/min, 7°C/min, 8°C/min, 9°C/min, 10°C/min or more. Optionally, the heating rate is 1°C/min-8°C/min, 1.5°C/min-6°C/min, 1.5°C/min-5°C/min, and 1.5°C/min-4°C/min.

The inventors find during the researches that when the heating rate is within the above range, the pore size and/or the pore content in the outer region and the inner region of the carbon material are favorably adjusted within an appropriate range. Besides, the following situations may be effectively avoided: when the heating rate is too high, the filling material may carbonize on the surface of the raw material particle, such that the filling material is not easily filled into the pore structures of the raw material. Therefore, the internal defects of the particle cannot be effectively modified and the electrolyte solution also cannot be not effectively prevented from permeating into the pore structures inside the obtained carbon material particle, thereby affecting the initial coulombic efficiency and the cycling performance of the secondary battery. When the heating rate is too low, the filling material is easy to flow and fill into all pore structures of the raw material, such that the volume change of the carbon material is large during the intercalation and deintercalation of active ions, the particle is easier to break, the consumption of active ions by a film formation of an SEI film is increased, the irreversible capacity loss of the secondary battery is increased, and meanwhile, the cycling performance and the dynamic performance of the secondary battery can be further affected.

In some embodiments, in step 2, the heat treatment may be conducted in a box furnace, an intermediate-frequency furnace, a roller kiln, a rotary kiln, or a pushed slab kiln.

In some embodiments, in step 2, a heat treatment atmosphere may be a protective gas atmosphere. The protective gas may include one or more of nitrogen, argon, and helium.

In step 2, by adjusting one or more of the heating rate, the first temperature, the first time, etc., to be within the above ranges, a carbon material achieving a desired structure is favorably prepared, for example, the pore size and/or pore content in the outer region and the inner region of the carbon material are favorably adjusted to be within an appropriate range.

In some embodiments, the second temperature T₂ is 2,000°C to 2,720°C, e.g., may be a range consisting of any value of 2,050°C, 2,100°C, 2,150°C, 2,200°C, 2,250°C, 2,300°C, 2,350°C, 2,400°C, 2,450°C, 2,500°C, 2,550°C, 2,600°C, 2,650°C, 2,700°C or more. Optionally, the second temperature T₂ is 2,050°C-2,550°C, 2,100°C-2,550°C, 2,150°C-2,550°C, 2,150°C-2,500°C, and 2,150°C-2,400°C.

The inventors find during the researches that when the second temperature is in the above range, two diffraction peaks exist in a range of 25.5°-27.5° of 2θ in a peak-resolving pattern of an X-ray diffraction pattern of the carbon material and the ratio of the intensity of the first peak to that of the second peak is favorably adjusted within an appropriate range. Besides, the following situations may be effectively avoided: when the second temperature is too low, the ratio of the intensity of the first peak to that of the second peak is large. Besides, the content of a component with a low graphitization degree and/or amorphous carbon (e.g., soft carbon, etc.) in the resulting carbon material is large, thereby resulting in a relatively high defect content of the carbon material, and affecting the initial coulombic efficiency, capacity per gram and cycling performance of the carbon material. When the second temperature is too high, two diffraction peaks do not both exist in a range of 25.5°-27.5° of 2θ in a peak-resolving pattern of an X-ray diffraction pattern of the carbon material or the ratio of the intensity of the first peak to that of the second peak is small. In such a case, this does not facilitate the rapid intercalation and deintercalation of active ions, thereby affecting the dynamic performance of the secondary battery.

In some embodiments, the second time t₂ is 1.5 h-6 h. For example, the second time t₁ may be a range consisting of any value of 2 h, 2.5 h, 3 h, 3.5 h, 4 h, 4.5 h, 5 h, 5.5 h, 6 h or more. Optionally, the second time t₂ is 2 h-5 h.

The inventors find during the researches that when the second time is in the above range, two diffraction peaks exist in a range of 25.5°-27.5° of 2θ in a peak-resolving pattern of an X-ray diffraction pattern of the carbon material and the ratio of the intensity of the first peak to that of the second peak is favorably adjusted within an appropriate range. Besides, the following situations may be effectively avoided: The inventors find during the researches that when the second time is too short, the ratio of the intensity of the first peak to that of the second peak is large, thereby causing a high defect content of the carbon material and affecting the initial coulombic efficiency, capacity per gram and cycling performance of the carbon material. When the second time is too long, two diffraction peaks do not both exist in a range of 25.5°-27.5° of 2θ in a peak-resolving pattern of an X-ray diffraction pattern of the carbon material or the ratio of the intensity of the first peak to that of the second peak is small. In such a case, this does not facilitate the rapid intercalation and deintercalation of active ions, thereby affecting the dynamic performance of the secondary battery.

**In** some embodiments, in step 3, the heat treatment may be carried out in an intermediate-frequency furnace, a box-type graphitization furnace, an Acheson graphitization furnace, a continuous graphitization furnace, or a length wise graphitization furnace.

**In** some embodiments, in step 3, a continuous graphitization heat treatment atmosphere may be a protective gas atmosphere. The protective gas may include one or more of nitrogen, argon, and helium.

By adjusting one or both of the second temperature and the second time within the above ranges, the carbon material has two diffraction peaks in a range of 25.5°-27.5° of 2θ in a peak-resolving pattern of an X-ray diffraction pattern of the carbon material and the ratio of the intensity of the first peak to that of the second peak is favorably adjusted within an appropriate range.

The method for preparing a carbon material of the present application is simple in process and high in safety, does not need to preset a pressure or performing a vacuumizing treatment, and can avoid the need of additionally adding a depolymerization process in a heat treatment process. The carbon material prepared by the present application has a small volume expansion, a high structural stability and a high active ion diffusion speed, such that the carbon material can have a higher capacity per gram, a higher initial coulombic efficiency and a smaller volume change, and the secondary battery can further have good cycling performance and dynamic performance, and can further have a high initial coulombic efficiency and a high energy density.

The preparation method of the present application has low cost and higher practicability, and is suitable for large-scale production.

### Secondary battery

A third aspect of an embodiment of the present application provides a secondary battery.

The type of the secondary battery is not particularly limited in the present application. For example, the secondary battery may be a lithium-ion battery. Generally, the secondary battery comprises a positive electrode plate, a negative electrode plate, and an electrolyte etc. During the charging and discharging process of the secondary battery, active ions are intercalated and deintercalated back and forth between the positive electrode plate and the negative electrode plate, and the electrolyte functions for active ions conduction between the positive electrode plate and the negative electrode plate. The type of the electrolyte is not particularly limited in the present application, and can be selected according to actual requirements. For example, the electrolyte may be selected from at least one of a solid electrolyte and a liquid electrolyte (i.e., an electrolyte solution). The secondary battery using an electrolyte solution and some secondary batteries using a solid electrolyte further may comprise a separator. The separator is arranged between the positive electrode plate and the negative electrode plate, and functions for isolation.

### [Negative electrode plate]

In some embodiments, the negative electrode plate comprises a negative electrode current collector and a negative electrode film layer arranged on at least one surface of the negative electrode current collector. For example, the negative electrode current collector has two opposite surfaces in the thickness direction thereof, and the negative electrode film layer is arranged on either or both of the two opposite surfaces of the negative electrode current collector.

In some embodiments, the negative electrode film layer comprises a carbon material according to the first aspect of an embodiment of the present application or a carbon material prepared by the method according to the second aspect of an embodiment of the present application. Therefore, the secondary battery has both good cycling performance and dynamic performance.

In some embodiments, the negative electrode film layer may further comprise other negative electrode active materials in addition to the carbon material. In some embodiments, the other negative electrode active materials may include but are not limited to one or more of conventional natural graphite, synthetic graphite, soft carbon, hard carbon, a silicon-based material, a tin-based material, and lithium titanate. The silicon-based material may include one or more of elemental silicon, a silicon oxide, a silicon carbon composite, a silicon nitrogen composite, and a silicon alloy material. The tin-based material may include one or more of elemental tin, a tin oxide, and a tin alloy material.

In some embodiments, the negative electrode film layer may further optionally comprise a negative electrode conductive agent. In the present application, the type of the negative electrode conductive agent is not particularly limited. As an example, the negative electrode conductive agent may include one or more of superconducting carbon, conductive graphite, acetylene black, carbon black, Ketjen black, carbon dots, carbon nanotubes, graphene and carbon nanofibers.

In some embodiments, the negative electrode film layer may also optionally comprise a negative electrode binder. In the present application, the type of the negative electrode binder is not particularly limited. As an example, the negative electrode binder may include one or more of a styrene-butadiene rubber (SBR), a water-soluble unsaturated resin SR-1B, a water-based acrylic resin (for example, polyacrylic acid PAA, polymethacrylic acid PMAA, and sodium polyacrylate PAAS), polyacrylamide (PAM), polyvinyl alcohol (PVA), sodium alginate (SA), and carboxymethyl chitosan (CMCS).

In some embodiments, the negative electrode film layer may further optionally comprise other auxiliary agents. As an example, the other auxiliary agents may include a thickener, for example, sodium carboxymethyl cellulose (CMC) and a PTC thermistor material.

In some embodiments, the negative electrode current collector may be a metal foil or a composite current collector. As an example of the metal foil, a copper foil may be used. The composite current collector may comprise a polymer material base layer and a metal material layer formed on at least one surface of the polymer material base layer. As an example, the metal material may include one or more of copper, a copper alloy, nickel, a nickel alloy, titanium, a titanium alloy, silver, and a silver alloy. As an example, the polymer material base layer may include one or more of polypropylene (PP), polyethylene terephthalate (PET), polybutylene terephthalate (PBT), polystyrene (PS), and polystyrene ethylene (PE).

The negative electrode film layer is typically formed by coating a negative electrode slurry on the negative electrode current collector, followed by drying and cold pressing. The negative electrode slurry is generally formed by dispersing a negative electrode active material, an optional conductive agent, an optional binder, and other optional auxiliary agents into a solvent and uniformly stirring same. The solvent may be N-methylpyrrolidone (NMP) or deionized water, but is not limited thereto.

The negative electrode plate does not exclude other additional functional layers in addition to the negative electrode film layer. For example, in some embodiments, the negative electrode plate of the present application further comprises a conductive primer (e.g., composed of a conductive agent and a binder) sandwiched between the negative electrode current collector and the negative electrode film layer and arranged on the surface of the negative electrode current collector. In some embodiments, the negative electrode plate of the present application further comprises a protective layer covering the surface of the negative electrode film layer.

### [Positive electrode plate]

In some embodiments, the positive electrode plate comprises a positive current collector and a positive film layer arranged on at least one surface of the positive current collector. For example, the positive electrode current collector has two opposite surfaces in the thickness direction thereof and the positive electrode film layer is arranged on either or both of the two opposite surfaces of the positive electrode current collector.

The positive electrode current collector may be a metal foil or a composite current collector. As an example of the metal foil, an aluminum foil may be used. The composite current collector may comprise a polymer material base layer and a metal material layer formed on at least one surface of the polymer material base layer. As an example, the metal material may include one or more of aluminum, an aluminum alloy, nickel, a nickel alloy, titanium, a titanium alloy, silver, and a silver alloy. As an example, the polymer material base layer may include one or more of polypropylene (PP), polyethylene terephthalate (PET), polybutylene terephthalate (PBT), polystyrene (PS), and polystyrene ethylene (PE).

The positive electrode film layer typically comprises a positive electrode active material, an optional binder and an optional conductive agent. The positive electrode film layer is usually formed by applying a positive electrode slurry to a positive electrode current collector, and drying and cold-pressing same. The positive electrode slurry is usually formed by dispersing the positive electrode active material, an optional conductive agent, an optional binder, and any other components in a solvent, and uniformly stirring same. The solvent may be N-methylpyrrolidone (NMP), but is not limited thereto. As an example, the binder for the positive electrode film layer may include one or more of polyvinylidene fluoride (PVDF), polytetrafluoroethylene (PTFE), a vinylidene fluoridetetrafluoroethylene-propylene terpolymer, a vinylidene fluoride-hexafluoropropylene-tetrafluoroethylene terpolymer, a tetrafluoroethylene-hexafluoropropylene copolymer, and a fluorinecontaining acrylate resin. As an example, the conductive agent for the positive electrode film layer may include one or more of superconductive carbon, conductive graphite, acetylene black, carbon black, Ketjen black, carbon dots, carbon nanotubes, graphene, and carbon nanofibers.

The positive electrode active material may be a positive electrode active material for secondary batteries well-known in the art.

When the secondary battery of the present application is a lithium-ion battery, the positive electrode active material may include, but is not limited to one or more of a lithium-containing transition metal oxide, a lithium-containing phosphate, and a respective modified compound thereof. Examples of the lithium-containing transition metal oxide may include, but are not limited to, one or more of a lithium cobalt oxide, a lithium nickel oxide, a lithium manganese oxide, a lithium nickel cobalt oxide, a lithium manganese cobalt oxide, a lithium nickel manganese oxide, a lithium nickel cobalt manganese oxide, a lithium nickel cobalt aluminum oxide, and a respective modified compound thereof. An example of the lithium-containing phosphate may include, but is not limited to, one or more of lithium iron phosphate, a lithium iron phosphate-carbon composite, lithium manganese phosphate, a lithium manganese phosphate-carbon composite, lithium iron manganese phosphate, a lithium iron manganese phosphate-carbon composite, and a respective modified compound thereof.

In some embodiments, in order to further improve the energy density of the secondary battery, the positive electrode active material for a lithium-ion battery may comprise one or more of the lithium transition metal oxide represented by a general formula of LiₐNi_{b}Co_{c}MdOₑA_{f}, and a respective modified compound thereof. 0.8 ≤ a ≤ 1.2, 0.5 ≤ b < 1, 0 < c< 1, 0< d< 1, 1 ≤ e ≤ 2, and 0 ≤ f ≤ 1, M is selected from one or more of Mn, Al, Zr, Zn, Cu, Cr, Mg, Fe, V, Ti and B, and A is selected from one or more of N, F, S and Cl.

In some embodiments, as an example, the positive electrode active material for the lithium-ion battery may include one or more of LiCoO₂, LiNiO₂, LiMnO₂, LiMn₂O₄, LiNi_{1/3}Co_{1/3}Mn_{1/3}O₂ (NCM333), LiNi_{0.5}Co_{0.2}Mn_{0.3}O₂ (NCM523), LiNi_{0.6}Co_{0.2}Mn_{0.2}O₂ (NCM622), LiNi_{0.8}Co_{0.1}Mn_{0.1}O₂ (NCM811), LiNi_{0.85}Co_{0.15}Al_{0.05}O₂, LiFePO₄ and LiMnPO₄.

In the present application, the modified compound of each positive electrode active material may be obtained by the doping modification and/or surface coating modification of the positive electrode active material.

### [Electrolyte]

In some embodiments, an electrolyte solution is used as the electrolyte and comprises an electrolyte salt and a solvent.

The type of the electrolyte salt is not specifically limited and may be selected according to actual requirements.

When the secondary battery of the present application is a lithium-ion battery, as an example, the electrolyte salt may include one or more of lithium hexafluorophosphate (LiPF₆), lithium tetrafluoroborate (LiBF₄), lithium perchlorate (LiClO₄), lithium hexafluoroarsenate (LiAsF₆), lithium bisfluorosulfonimide (LiFSI), lithium bistrifluoromethanesulfonimide (LiTFSI), lithium trifluoromethanesulfonate (LiTFS), lithium difluorooxalate borate (LiDFOB), lithium dioxalate borate (LiBOB), lithium difluorophosphate (LiPO₂F₂), lithium bisoxalatodifluorophosphate (LiDFOP) and lithium tetrafluorooxalate phosphate (LiTFOP).

The type of the solvent is not specifically limited and may be selected according to actual requirements. In some embodiments, as an example, the solvent may comprise one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), ethyl methyl sulfone (EMS) and diethyl sulfone (ESE).

In some embodiments, the electrolyte solution may further optionally comprise an additive. For example, the additive may comprise a negative electrode film-forming additive, or may also comprise a positive electrode film-forming additive, or may also comprise an additive that may improve certain performances of a secondary battery, such as an additive that improves the overcharge performance of a secondary battery, an additive that improves the high-temperature performance of a secondary battery, and an additive that improves the low-temperature power performance of a secondary battery.

### [Separator]

The type of the separator is not particularly limited in the present application, and any well-known porous-structured separator with good chemical stability and mechanical stability may be selected.

In some embodiments, the material of the separator may include one or more of glass fibers, a non-woven, polyethylene, polypropylene, and polyvinylidene fluoride. The separator may be either a single-layer film or a multi-layer composite film. When the separator is a multi-layer composite film, the materials of the respective layers are the same or different.

In some embodiments, the positive electrode plate, the separator, and the negative electrode plate may be formed into an electrode assembly by a winding process or a stacking process.

In some embodiments, the secondary battery may comprise an outer package. The outer package may be used to encapsulate the electrode assembly and electrolyte.

In some embodiments, the outer package can be a hard housing, for example, a hard plastic housing, an aluminum housing, a steel housing, etc. The outer package may also be a soft bag, such as a pouch-type soft bag. The material of the soft bag may be plastics, such as one or more of polypropylene (PP), polybutylene terephthalate (PBT), and polybutylene succinate (PBS).

The shape of the secondary battery is not particularly limited in the present application and may be cylindrical, square or of any other shape. Fig. 3 shows a secondary battery 5 with a square structure as an example.

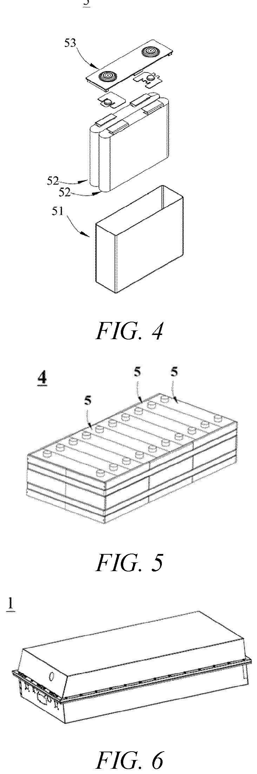

In some embodiments, as shown in Fig. 4, the outer package may comprise a housing 51 and a cover plate 53. The housing 51 may comprise a bottom plate and side plates connected to the bottom plate, and the bottom plate and the side plates are enclosed to form an accommodating cavity. The housing 51 has an opening in communication with the accommodating cavity, and the cover plate 53 is used for covering the opening to close the accommodating cavity. The positive electrode plate, the negative electrode plate, and the separator may be subjected to a winding process or a laminating process to form an electrode assembly 52. The electrode assembly 52 is packaged in the accommodating cavity. The electrolyte solution infiltrates the electrode assembly 52. The number of the electrode assemblies 52 contained in the secondary battery 5 may be one or more and may be adjusted according to requirements.

The method for preparing the secondary battery of the present application is well-known. In some embodiments, the positive electrode plate, the separator, the negative electrode plate, and the electrolyte solution may be assembled to form a secondary battery. As an example, the positive electrode plate, the separator, and the negative electrode plate may be formed into an electrode assembly by a winding process or a stacking process, the electrode assembly is placed in an outer package and dried, an electrolyte solution is injected, and the electrode assembly is subjected to procedures such as vacuum packaging, standing, forming, and shaping to obtain a secondary battery.

In some examples of the present application, the secondary battery according to the present application may be assembled into a battery module, the number of the secondary batteries contained in the battery module may be multiple, and the specific number may be adjusted according to the application and capacity of the battery module.

Fig. 5 shows a schematic diagram of a battery module 4 as an example. As shown in Fig. 5, in the battery module 4, a plurality of secondary batteries 5 may be arranged in sequence along the lengthwise direction of the battery module 4. Apparently, the secondary batteries may also be arranged in any other manner. Furthermore, the plurality of secondary batteries 5 may be fixed by fasteners.

Optionally, the battery module 4 may further comprise an outer housing with an accommodating space, and the plurality of secondary batteries 5 are accommodated in the accommodating space.

In some embodiments, the above battery module may further be assembled into a battery pack, and the number of the battery modules contained in the battery pack may be adjusted according to the application and capacity of the battery pack.

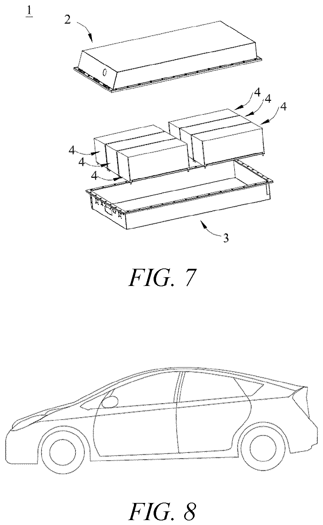

Figs. 6 and 7 show a schematic diagram of a battery pack 1 as an example. As shown in Figs. 6 and 7, the battery pack 1 may comprise a battery box and a plurality of battery modules 4 arranged in the battery box. The battery box comprises an upper box body 2 and a lower box body 3, and the upper box body 2 is used to cover the lower box body 3 to form a closed space for accommodating the battery modules 4. The plurality of the battery modules 4 may be arranged in the battery box in any manner.

### Power consuming device

The present application further provides a power consuming device comprising at least one of a secondary battery, a battery module, or a battery pack of the present application. The secondary battery, the battery module or the battery pack may be used as a power supply of the power consuming device or as an energy storage unit of the power consuming device. The power consuming device may be, but is not limited to, a mobile device (e.g., a mobile phone, a tablet computer, and a laptop computer), an electric vehicle (e.g., a pure electric vehicle, a hybrid electric vehicle, a plug-in hybrid electric vehicle, an electric bicycle, an electric scooter, an electric golf cart, and an electric truck), an electric train, a ship and a satellite, an energy storage system, etc.

A secondary battery, battery module or battery pack may be used for the power consuming device according to the usage requirements thereof.

Fig. 8 shows a schematic diagram of a power consuming device as an example. The power consuming device may be a pure electric vehicle, a hybrid electric vehicle, a plug-in hybrid electric vehicle, etc. In order to meet the requirements of the power consuming device for a high power and a high energy density, a battery pack or battery module may be used.

As another example, the power consuming device may be a mobile phone, a tablet computer, a laptop computer, etc. The power consuming device is generally required to be thin and light, and may have a secondary battery used as a power supply.

### Examples

The following examples more specifically describe the content disclosed in the present application, and these examples are only used for explanatory description, because various modifications and transitions within the scope of the present disclosure are obvious to those skilled in the art. Unless otherwise stated, all the parts, percentages, and ratios reported in the following examples are on a mass basis, and all the reagents used in the examples are commercially available, obtained by synthesis through a conventional method, and used directly without further treatment, and the instruments used in the examples are commercially available.

### Example 1

### (1) Preparation of carbon material

Step 1: 100-mesh crystalline flake graphite was mechanically crushed, classified, spheroidized and purified to obtain natural spherical graphite with a volume distribution particle size Dv50 of 15 µm, a carbon element content of 99.9% and a graphitization degree of 95%.

Step 2: the resulting natural spherical graphite was mixed with petroleum pitch (a softening point temperature of 150°C, a volume distribution particle size Dv50 of 5 µm, and a coking value of 35%) in a VC mixer at a mass ratio of 80 : 20 for 30 min, and the mixed materials were placed in a crucible, heated to 1,100°C at 2°C/min in a box furnace, and maintained at the temperature for 2 h. Then the mixture was naturally cooled to room temperature to obtain an intermediate.

Step 3: the resulting intermediate was placed in an Acheson graphitization furnace, heated to 2,400°C, and maintained at the temperature for 3 h. Then the material was demagnetized and screened to obtain the carbon material.

### (2) Preparation of button cell (half cell)

The carbon material prepared above, a binder of a styrene-butadiene rubber (SBR), a thickener of sodium carboxymethylcellulose (CMC), and a conductive agent of carbon black were fully stirred and mixed at a mass ratio of 96.2 : 1.8 : 1.2 : 0.8 in an appropriate amount of a solvent of deionized water to form a uniform negative electrode slurry. The negative electrode slurry was uniformly coated onto a surface of a negative electrode current collector of a copper foil, followed by drying in a baking oven for use. ethylene carbonate (EC), ethyl methyl carbonate (EMC), and diethyl carbonate (DEC) at a volume ratio of 1 : 1 : 1 were mixed to obtain an organic solvent, and then LiPF₆ was dissolved in the organic solvent to prepare an electrolyte solution at a concentration of 1 mol/L; followed by assembling a CR2430 button cell in an argon-protected glove box using a metal lithium plate as a counter electrode, and a polyethylene (PE) film as a separator.

### (3) Preparation of secondary battery (full battery)

The carbon material prepared above, a conductive agent of carbon black (Super P), a binder of a styrene-butadiene rubber, and a thickener of sodium carboxymethylcellulose were fully stirred and uniformly mixed at a weight ratio of 96 : 1 : 1 : 2 in a solvent of deionized water to obtain a negative electrode slurry. The negative electrode slurry was coated onto two surfaces of a negative electrode current collector of a copper foil, followed by drying and cold pressing, to obtain a negative electrode plate.

LiNi_{0.5}Co_{0.2}Mn_{0.3}O₂ (NCM523), conductive carbon black, and polyvinylidene fluoride were mixed at a weight ratio of 96 : 2.5 : 1.5, an appropriate amount of a solvent NMP was added, and the materials were mixed uniformly to obtain a positive electrode slurry. The positive electrode slurry was coated onto two surfaces of a positive electrode current collector of an aluminum foil, followed by drying and cold pressing, to obtain a positive electrode plate.

A polypropylene film with a thickness of 12 µm was used as a separator, the separator, the positive electrode plate and the negative electrode plate prepared above were placed in sequence, such that the separator is located between the positive electrode plate and the negative electrode plate to function for separation, followed by winding to obtain an electrode assembly. The electrode assembly was placed in an outer packaging, the same electrolyte solution as that of the button cell prepared above was injected after drying, followed by procedures of vacuum packaging, leaving to stand, forming, capacity, etc., to obtain a secondary battery.

### Comparative example 1

The preparation methods for the half cell and the full battery were similar to those of example 1, except the preparation process for the carbon material.

100-mesh crystalline flake graphite was mechanically crushed, classified, spheroidized and purified to obtain natural spherical graphite with a volume distribution particle size Dv50 of 15 µm, a carbon element content of 99.9% and a graphitization degree of 95%.

### Comparative example 2

The preparation methods for the half cell and the full battery were similar to those of example 1, except the preparation process for the carbon material.

100-mesh crystalline flake graphite was mechanically crushed, classified, spheroidized and purified to obtain natural spherical graphite with a volume distribution particle size Dv50 of 15 µm, a carbon element content of 99.9% and a graphitization degree of 95%. The resulting natural spherical graphite was mixed with petroleum pitch (a softening point temperature of 150°C, a volume distribution particle size Dv50 of 5 µm, and a coking value of 35%) in a VC mixer at a mass ratio of 80 : 20 for 30 min, and then the mixed materials were graphitized at 3,200°C for 10 h, followed by cooling to room temperature to obtain the carbon material.

### Comparative example 3

The preparation methods for the half cell and the full battery were similar to those of example 1, except the preparation process for the carbon material.

100-mesh crystalline flake graphite was mechanically crushed, classified, spheroidized and purified to obtain natural spherical graphite with a volume distribution particle size Dv50 of 15 µm, a carbon element content of 99.9% and a graphitization degree of 95%. The resulting natural spherical graphite was mixed with petroleum pitch (a softening point temperature of 150°C, a volume distribution particle size Dv50 of 5 µm, and a coking value of 35%) in a VC mixer at a mass ratio of 80 : 20 for 30 min, and then the mixed materials were carbonized at 1200°C for 3 h, followed by cooling to room temperature to obtain the carbon material.

### Comparative example 4

The preparation methods for the half cell and the full battery were similar to those of example 1, except the preparation process for the carbon material.

100-mesh crystalline flake graphite was mechanically crushed, classified, spheroidized and purified to obtain natural spherical graphite with a volume distribution particle size Dv50 of 15 µm, a carbon element content of 99.9% and a graphitization degree of 95%.

The resulting natural spherical graphite was mixed with petroleum pitch (a softening point temperature of 150°C, a volume distribution particle size Dv50 of 5 µm, and a coking value of 35%) in a VC mixer for 30 min. Then the mixed materials were put into a reaction kettle, the reaction kettle was heated to 190°C by gradual heating at a heating speed of 2°C/min, under a uniform stirring state, and then pumped to a pressure of -0.1 Mpa, and then maintained at the temperature for 2 h. After the completion of the temperature maintaining, the reaction kettle was heated to 650°C, and maintained at the temperature for 2 h. Then the reaction kettle was cooled to about 160°C, then petroleum pitch was slowly added into the reaction kettle, at a mass ratio of the amount of the petroleum pitch added to that of the previous petroleum pitch of 1 : 1, then the reaction kettle was heated to 190°C again, the reaction kettle was pumped to a pressure of -0.1 Mpa, and then maintained at the temperature for 2 h. After the completion of the temperature maintaining, the reaction kettle was heated to 650°C, and maintained at the temperature for 2 h, followed by cooling by means of condensation. Finally, the materials treated above were thermally treated at 1,200°C for 3 h, and the thermally treated sample was crushed and sieved to obtain the carbon material without pores inside.

### Examples 2-21

The preparation methods for the half cell and the full battery were similar to those of example 1, except the preparation process parameters of the carbon material were adjusted, with the specific parameters shown in table 1.

**Table 1**

| No. | Natural spherical graphite | | Mass ratio of petroleu m pitch to natural spherical graphite | Step 2 | | Step 3 | |
|---|---|---|---|---|---|---|---|
| | Carbon element content | Graphiti zation degree | | Temperatur e-maintaining (°C) | Temperatur e-maintaining time (h) | Temperatur e-maintaining (°C) | Temperatur e-maintaining time (h) |
| Example 1 | 99.9% | 95% | 20 : 80 | 1,100 | 2 | 2,400 | 3 |
| Example 2 | 99.9% | 95% | 20 : 80 | 1,100 | 2 | 2,300 | 3 |
| Example 3 | 99.9% | 95% | 20 : 80 | 1,100 | 2 | 2,200 | 3 |
| Example 4 | 99.9% | 95% | 20 : 80 | 1,100 | 2 | 2,550 | 3 |
| Example 5 | 99.9% | 95% | 20 : 80 | 1,100 | 2 | 2,600 | 3 |
| Example 6 | 99.9% | 95% | 20 : 80 | 1,100 | 2 | 2,700 | 3 |
| Example 7 | 99.9% | 95% | 20 : 80 | 1,100 | 2 | 2,000 | 3 |
| Example 8 | 99.9% | 95% | 20 : 80 | 1,100 | 2 | 2,400 | 1 |
| Example 9 | 99.9% | 95% | 20 : 80 | 1,100 | 2 | 2,400 | 2 |
| Example 10 | 99.9% | 95% | 20 : 80 | 1,100 | 2 | 2,400 | 4 |
| Example 11 | 99.9% | 95% | 20 : 80 | 1,100 | 2 | 2,400 | 5 |
| Example 12 | 99.9% | 95% | 20 : 80 | 1,100 | 2 | 2,400 | 7 |
| Example 13 | 99.9% | 95% | 5:95 | 1,100 | 2 | 2,400 | 3 |
| Example 14 | 99.9% | 95% | 10 : 90 | 1,100 | 2 | 2,400 | 3 |
| Example 15 | 99.9% | 95% | 15 : 85 | 1,100 | 2 | 2,400 | 3 |
| Example 16 | 99.9% | 95% | 25 : 75 | 1,100 | 2 | 2,400 | 3 |
| Example 17 | 99.9% | 95% | 40 : 60 | 1,100 | 2 | 2,400 | 3 |
| Example 18 | 99.9% | 90% | 20 : 80 | 1,100 | 2 | 2,400 | 3 |
| Example 19 | 99.9% | 93% | 20 : 80 | 1,100 | 2 | 2,400 | 3 |
| Example 20 | 99.9% | 94% | 20 : 80 | 1,100 | 2 | 2,400 | 3 |
| Example 21 | 99.9% | 97% | 20 : 80 | 1,100 | 2 | 2,400 | 3 |

### Performance test

### (1) X-ray diffraction test of carbon material

The carbon material is tested by using an X-ray diffractometer with the reference to JIS K 0131-1996 and JB/T 4220-2011 to obtain a phase structure of the carbon material. The X-ray diffraction pattern of the carbon material is refined by a Topas software and a Rietveld full-spectrum fitting and refining method.

In table 2, the first peak 2θ is between 26.256°-26.456°, and the second peak 2θ was between 26.509°-26.569°. The ratio of the intensity of the first peak to that of the second peak is a ratio of an integrated area of the first peak to that of the second peak. A test instrument may be a Bruker D8 Discover X-ray diffractometer. In the X-ray diffraction analysis test, the test conditions may be: the carbon material is prepared into a sample by a flat-plate sample preparation method, a copper target being used as an anode target, with CuKα ray as a radiation source, a voltage of 40 KV, a current of 40 mA, an anti-scattering slit of 1 mm, a scanning 2θ angle range of 20°-80°, a step size of 0.01671°, a time of each step of 0.24 s, and a scanning rate of 4°/min.

### (2) Total pore area test in outer region and inner region of carbon material

A binder for sample preparation and the carbon material powder are uniformly mixed, and the mixture is coated onto a copper foil and dried at 60°C for 30 min for use. The sample is cut into a size of 6 mm × 6 mm and adhered to a sample table of a CP argon ion cross-section polisher. The sample is cut by a plasma beam to obtain a cross section of the carbon material, wherein the cross section of the carbon material particle passes through the center of the carbon material particle. The test instrument may be an IB-09010 CP argon ion cross-section polisher from the JEOL corporation, Japan.

The cross section of the carbon material is scanned using a scanning electron microscope. Reference can be made to JY/T010-1996 for the test. The test instrument may be a Sigma 300 scanning electron microscope, ZEISS, Germany.

A region extending from the particle surface of the carbon material to the inside of the particle by a distance of 0.25 L is designated as an outer region, a region inside the outer region is designated as an inner region, and L represents the short axis length of the particle of the carbon material. The total pore area S₁ of the outer region of the carbon material and the total pore area S₂ of the inner region of the carbon material are calculated using an image processing software. The image processing software may be AVIZO.

### (3) Test of maximum charging rate of secondary battery

At 25°C, the secondary battery is discharged at a constant current of a rate of 1 C to a lower-limit cut-off voltage (corresponding to 0% SOC). Then the secondary battery is charged at a constant current of a rate of 1 C by a constant current to an upper-limit cut-off voltage (corresponding to 100% SOC) and continuously charged at a constant voltage to a current of 0.05 C. At this moment, the secondary battery was in a fully charged state. After being left to stand for 5 min, the fully charged secondary battery is discharged at a constant current of a rate of 1 C to a lower-limit cut-off voltage (corresponding to 0% SOC). At this moment, the discharge capacity is the actual capacity of the secondary battery at a rate of 1 C and designated as C0. The secondary battery is charged at a constant current of a rate of *x* C0 (representing gradient charging rates, for example, 1 C0, 1.05 C0, 1.1 C0, 1.15 C0 and 1.2 C0... ) to the upper-limit cut-off voltage (corresponding to 100% SOC), then continuously charged at a constant voltage until the current was 0.05 C0, and is left to stand for 5 min. The lithium precipitation on the surface of the negative electrode plate is observed after the secondary battery was disassembled. If no lithium is precipitated on the surface of the negative electrode plate, the charging rate is increased, and the test is conducted again until the lithium is precipitated on the surface of the negative electrode plate. The maximum charging rate at which no lithium is precipitated on the surface of the negative electrode plate, is recorded.

### (4) Test of cycling performance of secondary battery

At 25°C, the secondary battery prepared above is charged to an upper-limit cut-off voltage (corresponding to 100% SOC) at a constant current of 1 C, then charged to a current of 0.05 C at a constant voltage, left to stand for 5 min, and then discharged to a lower-limit cut-off voltage (corresponding to 0% SOC) at a constant current of 1 C. At this moment, the discharge capacity, namely the discharge capacity of the 1st circle, is recorded. The secondary battery is subjected to a charge/discharge cycling test according to the above method, and the discharge capacity after each cycle is recorded. Capacity retention rate of secondary battery after cycling at 25°C for 2,500 cycles (%) = discharge capacity after 2,500 cycles/discharge capacity of the 1st cycle × 100%.

**Table 2**

| No. | Performances of carbon material | | | | Performances of battery | |
|---|---|---|---|---|---|---|
| | Intensity of first peak: intensity of second peak | S₁ (µm²) | S₂ (µm²) | S₂/S₁ | Maximum charging rate | Capacity retention rate after cycling for 2,500 cycles |
| Comparative example 1 | / | 9.92 | 9.76 | 0.98 | 0.60C0 | 80.0% |
| Comparative example 2 | / | 9.70 | 9.65 | 0.99 | 0.80C0 | 88.0% |
| Comparative example 3 | / | 9.78 | 9.59 | 0.98 | 1.25C0 | 86.0% |
| Comparative example 4 | / | 0.50 | 0.50 | 1.00 | 1.20C0 | 82.0% |
| Example 1 | 25 : 75 | 1.32 | 9.10 | 6.89 | 1.50C0 | 92.1% |
| Example 2 | 27 : 73 | 1.27 | 9.19 | 7.24 | 1.55C0 | 91.9% |
| Example 3 | 35 : 65 | 1.25 | 9.40 | 7.52 | 1.60C0 | 91.6% |
| Example 4 | 15 : 85 | 1.39 | 8.90 | 6.40 | 1.45C0 | 92.8% |
| Example 5 | 12 : 88 | 1.51 | 8.80 | 5.83 | 1.40C0 | 93.2% |
| Example 6 | 8 : 92 | 1.58 | 8.20 | 5.19 | 1.30C0 | 93.2% |
| Example 7 | 42 : 58 | 1.20 | 9.70 | 8.08 | 1.70C0 | 90.5% |
| Example 8 | 32 : 68 | 1.45 | 8.70 | 6.00 | 1.60C0 | 91.4% |
| Example 9 | 28 : 72 | 1.40 | 8.90 | 6.36 | 1.55C0 | 91.7% |
| Example 10 | 23 : 77 | 1.28 | 9.20 | 7.19 | 1.45C0 | 92.6% |
| Example 11 | 21 : 79 | 1.23 | 9.35 | 7.60 | 1.40C0 | 93.1% |
| Example 12 | 9 : 91 | 1.20 | 9.55 | 7.96 | 1.30C0 | 93.1% |
| Example 13 | 8 : 92 | 6.60 | 9.60 | 1.45 | 1.30C0 | 90.1% |
| Example 14 | 12 : 88 | 2.50 | 9.50 | 3.80 | 1.40C0 | 92.6% |
| Example 15 | 21 : 79 | 1.98 | 9.20 | 4.65 | 1.60C0 | 92.3% |
| Example 16 | 30 : 70 | 1.20 | 8.90 | 7.42 | 1.60C0 | 91.3% |
| Example 17 | 42 : 56 | 1.20 | 8.90 | 7.42 | 1.65C0 | 90.3% |
| Example 18 | 40 : 60 | 1.29 | 8.80 | 6.82 | 1.70C0 | 90.5% |
| Example 19 | 29 : 71 | 1.30 | 8.60 | 6.62 | 1.60C0 | 91.1% |
| Example 20 | 26 : 74 | 1.31 | 8.95 | 6.83 | 1.55C0 | 91.8% |
| Example 21 | 16: 84 | 1.29 | 8.90 | 6.90 | 1.30C0 | 93.2% |

The specific surface area, the volume distribution particle size, the powder resistivity, the powder compacted density and other parameters of the carbon materials prepared in examples 1-21 are all within the ranges specified in the description of the present invention. Besides, the carbon material has no diffraction peak of a 3R phase C(012) crystal face in an X-ray diffraction pattern of the carbon material.

It can be known by combining the test results in table 2 that when two diffraction peaks exist in a range of 25.5°-27.5° of 2θ in a peak-resolving pattern of an X-ray diffraction pattern of the carbon material, the battery can have both good cycling performance and dynamic performance. In addition, when a ratio of the intensity of the first peak to that of the second peak is further 10 : 90 to 40 : 60, optionally 15 : 85 to 35 : 65, the battery can better have good cycling performance and dynamic performance, and can further have a high energy density.

It can be further known by combining the test results in table 2 that when the carbon material particles further satisfy S₂ > S₁, optionally 1.5 ≤ S₂/S₁ ≤ 450, and more optionally 2 ≤ S₂/S₁ ≤ 400, the overall performance of the battery is further improved. In such a case, the carbon material particle further has the following characteristics: the inner region has a high pore content and/or a large pore size, while the outer region has a low pore content and/or a small pore size. The pore structures of the inner region of the carbon material can reserve a required expansion space for a volume change of the carbon material particles, such that the risk of generating a new interface by breakage of the carbon material particles can be reduced, the occurrence of side reactions are reduced, and the irreversible capacity loss of the battery is reduced. The outer region of the carbon material particle has a low pore content and/or a small pore size. Therefore, the carbon material particles can have a more stable structure, an electrolyte solution can be prevented from penetrating into the pore structures inside the carbon material particles as much as possible, thereby reducing the occurrence of side reactions and reducing the consumption of active ions by a film formation of an SEI film inside the particles. Therefore, the carbon material further satisfying the structural characteristics can further improve the comprehensive performance of the battery.

Only one diffraction peak exists in a range of 25.5°-27.5° of 2θ in a peak-resolving pattern of an X-ray diffraction pattern of the carbon materials prepared in comparative examples 1-4. Besides, none of the carbon materials can enable the battery to have both good cycling performance and dynamic performance.

Untreated natural spherical graphite is used as a carbon material in comparative example 1, the carbon material particles have many pores inside, and only one diffraction peak exists in a range of 25.5°-27.5° of 2θ in a peak-resolving pattern of an X-ray diffraction pattern of the carbon material. It can be further known by combining the test results in table 2 that both the cycling performance and the dynamic performance of the prepared battery are relatively poor.

The carbon material prepared in comparative example 2 formed a carbon layer coating layer on the surface of the natural spherical graphite. Due to a higher heat treatment temperature and a longer heat treatment time, the graphitization degree of the carbon layer is close to that of a natural spherical graphite substrate, such that only one diffraction peak exists in a range of 25.5°-27.5° of 2θ in a peak-resolving pattern of an X-ray diffraction pattern of the carbon material, and in such a case, the carbon material has a relatively small interlayer spacing. It can be further known by combining the test results in table 2 that the battery thus prepared has a relatively poor dynamic performance. In addition, the coating layer only exists on the surface of the natural spherical graphite, such that an effective filling effect cannot be realized and the electrolyte solution cannot be effectively prevented from permeating into the pore structures inside the particle, thereby resulting in a limited effect of improving the cycling performance of the battery.

The carbon material prepared in comparative example 3 has a carbon layer coating layer formed on the surface of the natural spherical graphite. Due to a lower heat treatment temperature, the main component of the coating layer is amorphous carbon in such a case, crystalline carbon phases with different graphitization degrees do not appear in the carbon material, and only one diffraction peak exists in a range of 25.5°-27.5° of 2θ in a peak-resolving pattern of an X-ray diffraction pattern of the carbon material. In addition, the coating layer only exists on the surface of the natural spherical graphite, such that an effective filling effect cannot be realized and the electrolyte solution cannot be effectively prevented from permeating into the pore structures inside the particle, thereby resulting in a limited effect of improving the cycling performance and the dynamic performance of the battery.

For the carbon material prepared in comparative example 4, the filling material is filled into all the pore structures inside the natural spherical graphite particle by vacuum-pumping. Due to a lower heat treatment temperature, a large amount of amorphous carbon exists inside and/or on the surface of the particles of the carbon material in such a case, crystalline carbon phases with different graphitization degrees do not appear in the carbon material, and only one diffraction peak exists in a range of 25.5°-27.5° of 2θ in a peak-resolving pattern of an X-ray diffraction pattern of the carbon material. In addition, no pore structures exist in the resulting carbon material particles, such that the volume change of the carbon material is relatively large during the intercalation and deintercalation of active ions and the particles are easier to break, thereby resulting in a limited effect of improving the cycling performance and the dynamic performance of the battery.

It should be noted that the present application is not limited to the above embodiments. The above embodiments are exemplary only, and any embodiment that has substantially the same constitutions as the technical ideas and has the same effects within the scope of the technical solution of the present application falls within the technical scope of the present application. In addition, without departing from the gist of the present application, various modifications that are made to the embodiments and are conceivable to those skilled in the art, and other modes constructed by combining some of the constituent elements of the embodiments also fall within the scope of the present application.

## Claims

1. A carbon material, wherein the carbon material comprises pore structures, and has two diffraction peaks in a range of 25.5°-27.5° of 2θ in a peak-resolving pattern of an X-ray diffraction pattern of the carbon material.

2. The carbon material according to claim 1, wherein in the two diffraction peaks, a peak with a smaller 2θ is designated as a first peak, a peak with a larger 2θ is designated as a second peak, with a ratio of the intensity of the first peak to that of the second peak being 10 : 90 to 40 : 60, optionally 15 : 85 to 35 : 65.

3. The carbon material according to claim 1 or 2, wherein the carbon material comprises one or more pore structures having a pore area greater than or equal to 0.1 µm², optionally one or more pore structures having a pore area of 0.15 µm²-3.0 µm².

4. The carbon material according to any one of claims 1-3, wherein the carbon material comprises an outer region and an inner region located inside the outer region, wherein the outer region is a region extending from a surface of a carbon material particle to an inside of the particle by a distance of 0.25 L, L is a short axis length of the carbon material particle, the outer region has a total pore area designated as S₁, the inner region has a total pore area designated as S₂, and S₂ > S₁, optionally, 1.5 ≤ S₂/S₁ ≤ 450 and 2 ≤ S₂/S₁ ≤ 400.

5. The carbon material according to claim 4, wherein
0.01 µm² ≤ S₁ ≤ 8.0 µm², optionally, 0.02 µm² ≤ S₁ ≤ 4.5 µm²; and/or
2.5 µm² ≤ S₂ ≤ 25.0 µm², optionally, 3.0 µm² ≤ S₂ ≤ 22.5 µm²; and/or
L ≥ 4µm, optionally, 4 µm ≤ L ≤ 20 µm.

6. The carbon material according to claim 4 or 5, wherein
the pore structures in the outer region of the carbon material have an area of less than or equal to 0.2 µm², optionally less than or equal to 0.1 µm²; and/or
the inner region of the carbon material comprises one or more pore structures having an area greater than or equal to 0.1 µm², optionally one or more pore structures having an area of 0.15 µm²-3.0 µm².

7. The carbon material according to any one of claims 1-6, wherein the carbon material satisfies at least one of the following:
(1) the carbon material has a specific surface area of 0.5 m²/g-3.1 m²/g, optionally 0.7 m²/g-2.8 m²/g;
(2) the carbon material has a volume distribution particle size Dv50 of 8.0 µm-23.0 µm, optionally 9.0 µm-22.0 µm;
(3) the carbon material has (Dv90 - Dv10)/Dv50 of ≤ 1.55, optionally 0.5-1.50; and
(4) the carbon material has a morphology in the shape of one or more of a mass, a sphere, and a spheroid.

8. The carbon material according to any one of claims 1-7, wherein the carbon material satisfies at least one of the following:
(1) the carbon material has a powder resistivity under a pressure of 8 Mpa of 0.006 Ω.cm-0.051 Ω.cm, optionally 0.010 Ω.cm-0.040 Ω.cm;
(2) the carbon material has a powder compacted density under a pressure of 20,000 N of 1.70 g/cm³-1.95 g/cm³, optionally 1.72 g/cm³-1.92 g/cm³;
(3) the carbon material has a tap density of 0.90 g/cm³-1.35 g/cm³, optionally 0.95 g/cm³-1.32 g/cm³;
(4) the carbon material has a capacity per gram of 350 mAh/g-372 mAh/g, optionally 353 mAh/g-371 mAh/g;
(5) the carbon material has a graphitization degree of 91.5%-98.5%, optionally 92.5%-98.0%; and
(6) the carbon material has no diffraction peak of a 3R phase C(012) crystal face in an X-ray diffraction pattern of the carbon material.

9. A method for preparing a carbon material, comprising the steps of: step 1, providing a raw material with a plurality of pore structures; step 2, uniformly mixing the raw material and a filling material at a preset ratio, and then maintaining the mixture at a first temperature T₁ for a first time t₁ to obtain an intermediate; and step 3, maintaining the resulting intermediate at a second temperature T₂ for a second time t₂ to obtain a carbon material, wherein the carbon material comprises pore structures, and has two diffraction peaks in a range of 25.5°-27.5° of 2θ in a peak-resolving pattern of an X-ray diffraction pattern of the carbon material.

10. The method according to claim 9, wherein the raw material satisfies at least one of the following:
(1) the raw material comprises natural graphite, optionally, the natural graphite comprises one or more of crystalline flake graphite, natural spherical graphite, and microcrystalline graphite;
(2) the raw material has a volume distribution particle size Dv50 of 7.5 µm-23.0 µm, optionally 9.0 µm-22.0 µm;
(3) the raw material has a graphitization degree of ≥ 93.0%; and
(4) the raw material has a carbon element content of ≥ 98 wt%.

11. The method according to claim 9 or 10, wherein the filling material satisfies at least one of the following:
(1) the filling material has a softening point temperature of 120°C-300°C, optionally 125°C-250°C;
(2) the filling material has a coking value of 25%-70%, optionally 30%-60%;
(3) the filling material has a volume distribution particle size Dv50 of less than or equal to 6 µm, optionally 1 µm-5 µm; and
(4) the filling material comprises one or more of coal tar pitch, petroleum pitch, a resin and a high polymer material, optionally comprising one or more of coal tar pitch and petroleum pitch.

12. The method according to any one of claims 9-11, wherein a mass ratio of the filling material to the raw material is 10 : 90 to 25 : 75, optionally 12 : 88 to 25 : 75.

13. The method according to any one of claims 9-12, wherein
the first temperature T₁ is 1,000°C-1,400°C, optionally 1,050°C-1,250°C; and/or
the first time t₁ is 1 h-5 h, optionally 2 h-4 h; and/or
the second temperature T₂ is 2,000°C-2,720°C, optionally 2,150°C-2,550°C; and/or
the second time t₂ is 1.5 h-6 h, optionally 2 h-5 h.

14. The method according to any one of claims 9-13, wherein the first temperature T₁ is brought to at a rate of 1°C/min-10°C/min, optionally 1.5°C/min-5°C/min.

15. A secondary battery comprising a negative electrode plate, wherein the negative electrode plate comprises a carbon material according to any one of claims 1-8 or a carbon material prepared by the method according to any one of claims 9-14.

16. A power consuming device, comprising a secondary battery according to claim 15.
